# FASCICULE DE BREVET EUROPEEN

(11) **EP 4 308 859 B1**
(45) Date de publication et mention de la délivrance du brevet: **31.12.2025**
(21) Numéro de dépôt: 22716038.9
(22) Date de dépôt: 17.03.2022
(51) Int. Cl.: F24H 1/20, F24H 9/20, H02J 3/38, H02J 7/35

(54) **SYSTÈME DE GESTION D'UNE SOURCE A COURANT CONTINU A PUISSANCE VARIABLE**
SYSTEM ZUR VERWALTUNG EINER GLEICHSTROMQUELLE MIT VARIABLER LEISTUNG
SYSTEM FOR MANAGING A VARIABLE-POWER DC CURRENT SOURCE

(30) Priorité: 19.03.2021 EP 21163794
(43) Date de publication de la demande: 24.01.2024
(73) Titulaire: Wanit S.A., 1180 Bruxelles (BE)
(72) Inventeur: BAYET, Christian, 1180 Bruxelles (BE)
(74) Mandataire: AWA Benelux
(86) Numéro de dépôt international: PCT/EP2022/056974
(87) Numéro de publication internationale: WO 2022/195007

(56) Documents cités:
- EP-A1- 3 065 021
- WO-A1-2015/049381
- WO-A1-2017/089468

## Description

### Objet de l'invention

La présente invention a trait au domaine des alimentations électriques hors réseau, en particulier à un dispositif de régulation de l'énergie produite par une ou plusieurs sources à courant continu, notamment photovoltaïques, un système de gestion comprenant ledit dispositif, une méthode de contrôle dudit système gestion, ainsi qu'un programme d'ordinateur associé.

### Arrière-plan technologique et état de la technique

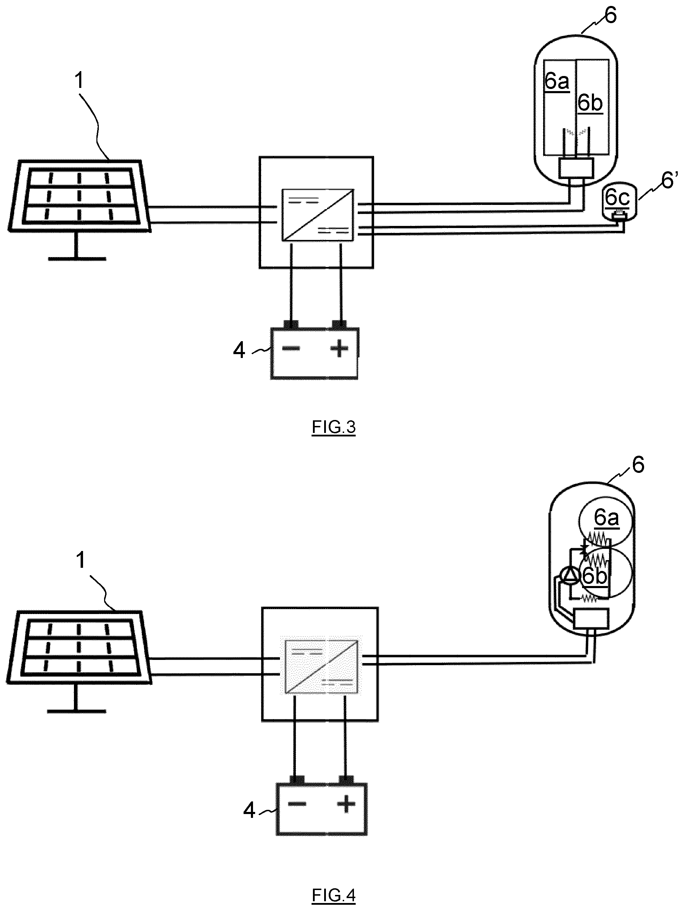

Il est connu qu'une source à courant continu de type photovoltaïque serve à alimenter un dispositif de chauffage d'eau destiné à alimenter un réseau domestique en eau chaude (voir EP3065021). Dans ce dispositif connu, une demande de chauffe intervient lorsque la puissance variable fournie par les panneaux photovoltaïques dépasse un certain seuil. Si la puissance produite n'est suffisante, cette dernière est alors renvoyée sur le réseau à perte. Afin d'améliorer le stockage de l'énergie solaire, des dispositifs de gestion de réseau domestique ont été développés pour assurer la modulation de la puissance injectée dans un chauffe-eau (voir EP3404334), s'adaptant ainsi aux fluctuations solaires. Cependant, ce dispositif en modulant le nombre de résistances chauffantes ne permet d'exploiter l'entièreté de la puissance disponible (voir figure 4 montrant que l'aire sous les courbes G2 ne sont pas entièrement hachurées). De surcroît, les dispositifs de chauffage d'eau connus présentent des pertes thermiques inhérentes. L'isolation des cuves d'eau chaude est restreinte par des considérations d'encombrement et de coûts. Aussi, les dispositifs de chauffage d'eau sont disposés dans des pièces non-réchauffées favorisant d'autant plus les perditions thermiques. Ces pertes peuvent représenter jusqu'à, par exemple, 10 % de l'énergie stockée dans une cuve d'eau initialement chauffée à 90°, dans un intervalle de 12h. En général les chauffe-eaux sont volumineux et sont donc placés loin des points de puisage occasionnant des pertes des linéaires dans les tuyaux de distribution entre la production/stockage et les points de puisage. Egalement WO2021049381A1, DE102014110982A1 et WO 2017089468 divulguent des systèmes de gestion de sources photovoltaïques pour un réseau alternatif d'un bâtiment et d'un chauffe-eau, respectivement.

### But de l'invention

L'invention a pour objectif de pallier au moins un des inconvénients de l'état de la technique susmentionné, en particulier de proposer un système de gestion d'une source à courant continu à puissance variable qui permette d'améliorer le bilan énergétique.

Plus particulièrement, les mesures de l'invention ont pour but d'exploiter au mieux l'énergie reçue par les cellules photovoltaïques selon une approche dite « maximal power point tracking » (suivi du point de puissance maximale) et ce particulièrement en saison hivernale

### Principaux éléments caractéristiques de l'invention

La présente invention concerne un système de gestion de l'énergie selon la revendication 1.

Selon des modes d'exécution avantageux de l'invention, le système comprend une ou plusieurs des caractéristiques comme définie(s) dans les revendications dépendantes 2 à 9.

La présente invention concerne aussi une méthode de contrôle du système gestion selon la revendication 10.

Des modes d'exécution avantageux de la méthode selon l'invention sont décrits dans les revendications dépendantes 11 à 14.

La présente invention concerne aussi un programme d'ordinateur comprenant des instructions qui, lorsque le programme est exécuté par au moins une unité de contrôle du système de gestion précédemment défini conduisent ladite unité de contrôle à mettre en œuvre les étapes de la méthode précédemment définie.

Les mesures de l'invention sont avantageuses en ce qu'elles permettent de fournir un système de gestion d'une source à courant continu qui améliore la durée de vie d'un dispositif de stockage d'énergie chimique, notamment une batterie.

Elles permettent aussi d'offrir des plus petites cuves et donc de plus petits chauffe-eaux, qui peuvent être placées en zone chaude proche des points de puisage pour réduire les pertes de distribution. De surcroît, les chauffe-eaux étant plus petits, ils peuvent être placés en zone chaude, et par conséquent il y a moins de perdition thermique.

### Description brève des figures

D'autres caractéristiques et avantages de la présente invention seront mieux compris à l'aide des dessins et de la description ci-après.
La figure 1 montre un système de gestion d'au moins une source à courant continu à puissance variable selon un premier mode d'exécution de l'invention.
La figure 2 montre un organigramme de contrôle du système de gestion d'au moins une source à courant continu selon le premier mode d'exécution de l'invention.
La figure 3 représente, de manière simplifiée, le système selon le premier mode d'exécution de l'invention.
La figure 4 illustre, de manière simplifiée, un deuxième mode d'exécution d'un système de gestion d'au moins une source à courant continu selon l'invention.
La figure 5 illustre, de manière simplifiée, un troisième mode d'exécution d'un système de gestion d'au moins une source à courant continu selon l'invention.
La figure 6 illustre, de manière simplifiée, un quatrième mode d'exécution d'un système de gestion d'au moins une source à courant continu selon l'invention.
Les figures 7a et 7b représentent des dispositifs d'électroniques de puissance qui peuvent être utilisés dans n'importe quel mode d'exécution de l'invention.
La figure 8a illustre, de manière simplifiée, un cinquième mode d'exécution d'un système de gestion d'au moins une source à courant continu selon l'invention (non revendiqué). La figure 8b illustre, de manière simplifiée, un sixième mode d'exécution d'un système de gestion d'au moins une source à courant continu (non revendiqué).
La figure 9 présente un comparatif entre un exemple de l'état de l'art et un mode fonctionnement d'un système de gestion selon un des modes d'exécution précités.

### Description des modes d'exécution préférés de l'invention

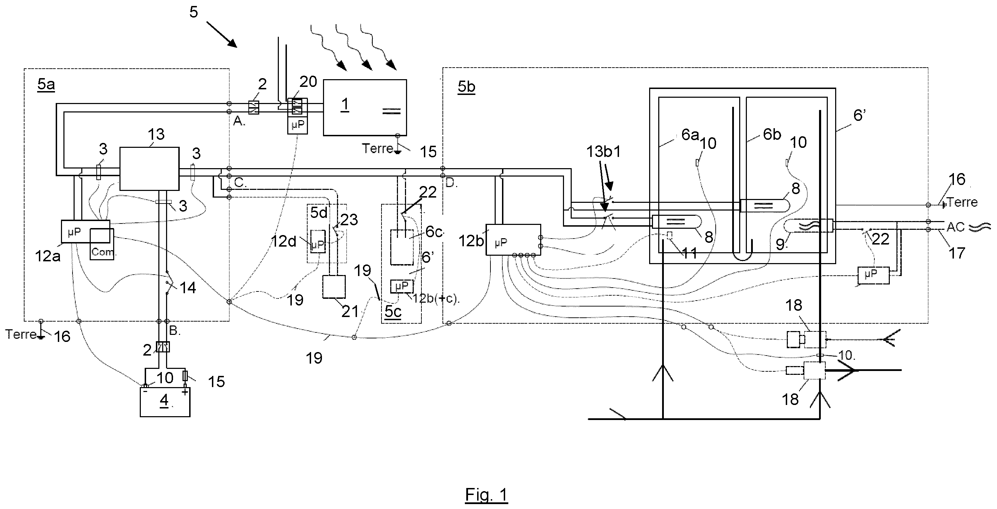

En figure 1, est représenté un premier mode d'exécution d'un système de gestion 5 d'une source 1 à courant continu CC (« DC » selon la thermologie anglo-saxonne) à puissance variable dans le temps. Dans la figure 1, la source à courant continu est un panneau photovoltaïque.

On entend par « source à courant continu dont la puissance varie » un générateur électrique qui transforme une source d'énergie solaire, mécanique, ou thermique en énergie électrique. La source peut être caractérisée par une courbe courant-tension (I-V) représentant l'ensemble des configurations électriques qu'elle peut prendre. Une source à courant continu et à puissance variable peut typiquement transformer de l'énergie solaire au travers d'un ou plusieurs panneaux photovoltaïques, de l'énergie éolienne au travers d'un aérogénérateur (éolienne + générateur avec courant redressé si nécessaire), de l'énergie hydraulique au travers d'une hydrogénérateur (turbine + générateur avec courant redressé si nécessaire) ou de l'énergie thermoélectrique au travers de cellules à effet Peltier. Dans ces quatre cas de figure, la puissance produite peut fluctuer dans la journée. La caractéristique « à courant continu » est bien connue de l'homme du métier qui fait la distinction entre les systèmes à courant continu et les systèmes à courant alternatif.

Dans la figure 1, le système de gestion 5 comprend un premier 6 et un deuxième 6' dispositifs de stockage d'énergie de type thermique, à savoir un premier chauffe-eau avec deux cuves 6A, 6B chauffées respectivement par deux résistances chauffantes 8 contrôlables de manière indépendante l'une de l'autre, ainsi qu'un bouilleur 6 dont la résistance chauffante n'est pas représentée. Le système de gestion 5 comporte aussi un dispositif de stockage d'énergie de type chimique 4, à savoir une batterie 4. Le système comprend, en outre, un dispositif de régulation, contrôlant, au moins, la puissance injectée vers les différents dispositifs de stockages d'énergies 4, 6, 6'. Les différents moyens de stockage d'énergie 4, 6, 6' peuvent être alimentés indépendamment l'un de l'autre, de façon à pouvoir réguler séparément les puissances qui y sont injectées. La figure 1 présente que le système de gestion 5 est connecté à un réseau domestique à courant alternatif (CA), via un dispositif de stockage d'énergie thermique hybride 6 chauffé à la fois par le courant CA et le courant CC. Cependant, dans une exécution alternative, le système de gestion 5 est indépendant (« hors-réseau »), du réseau domestique à courant alternatif (sans la présence d'interface de type onduleur/redresseur entre les réseaux CC et CA et/ou sans la présence d'un dispositif de stockage d'énergie thermique hybride chauffé à la fois par le courant CA et le courant CC).

On entend par non connecté à un réseau électrique un système de gestion sans la présence d'interface de type onduleur/redresseur entre les réseaux CC et CA et sans la présence d'un dispositif de stockage d'énergie thermique hybride chauffé à la fois par le courant CA et le courant CC

La figure 1 est représentée avec une batterie et un panneau solaire (champ de panneaux solaires). Cette représentation n'est pas limitative étant donné que plusieurs panneaux solaires ou batteries peuvent être disposés en série ou en parallèle selon les besoins de l'homme du métier, nonobstant qu'une batterie est en soi un ensemble de batteries élémentaires mises en série ou parallèle selon la tension ou la capacité de stockage désirée

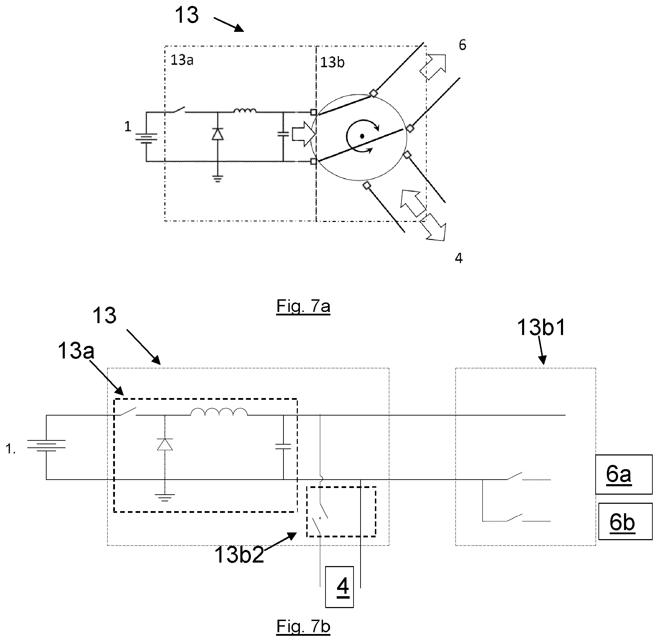

Le dispositif de régulation représenté en figure 1 comprend un dispositif d'électronique de puissance 13 comportant au moins un convertisseur CC/CC (« DC/DC » selon la thermologie anglo-saxonne). Un tel convertisseur CC/CC (13a, Fig. 7b), aussi dénommé hacheur, permet d'ajuster par exemple le rapport de tension entre l'entrée et la sortie du convertisseur 13a. La sortie du convertisseur est reliée à la batterie 4, au chauffe-eau 6 et au bouilleur 6'. L'entrée du convertisseur 13a est reliée à la source à courant continu à puissance variable 1. Des moyens de commutation (interrupteurs) 13b1, 22 sont interposés entre les dispositifs de stockages d'énergie de type thermique 6, 6' et la sortie du convertisseur 13a. Egalement, le moyen de commutation (interrupteur) 13b2 est interposé entre le dispositif de stockage d'énergie chimique 4 et la sortie du convertisseur 13a. Le convertisseur 13a est pilotée par son unité de contrôle 12a qui permet, au travers du rapport de tension (rapport de transformation) variable imposé par le hacheur, de contrôler le courant injecté dans au moins la batterie 4, le chauffe-eau 6 et/ou le bouilleur 6'. Le convertisseur de tension CC/CC 13a et l'ensemble des moyens de commutations 13b1, 13b2, 22 (aussi dénommé dispositif de commutation) permettent ensemble de distribuer la puissance variable produite par le panneau solaire 1 vers les différents consommateurs, à savoir la batterie 4, le chauffe-eau 6 et/ou le bouilleur 6'.

Pour assurer une utilisation optimale de l'énergie produite par la ou les sources à courant continu et à puissance variable (aussi dénommé courant continu variable), le système de gestion 5 est prévu pour assurer un équilibrage entre la puissance potentielle disponible (PD) de la ou des sources de tensions à courant continu et la puissance absorbable par les moyens de stockage d'énergie thermique (PT) et chimique (PC) .

Le dispositif de régulation est aussi prévu pour prolonger la durée de vie de la ou des batteries 4 en proposant une stratégie de (re)charge des batteries adaptée. Pour ce faire, l'état de charge SOC « State of Charge » de la (ou chaque) batterie est mesurée par exemple via la mesure de la tension en circuit ouvert ou au moyen de mesure de l'état de charge Soc comme un compteur de Coulomb. La stratégie de (re)charge et de décharge de la ou des batteries 4 veille à ce que la ou les batteries ne s'écartent pas des seuils de chargement ou déchargement critiques qui causeraient son ou leur vieillissement prématuré. Par ailleurs, le dispositif de régulation peut s'adapter au type de batterie(s) utilisée (s) et adapter la stratégie de (re)charge en conséquence. A cet effet, le dispositif peut comprendre une interface permettant de paramétrer le dispositif de régulation et en particulier de préciser le type de batterie(s) choisie(s).

On entend par dispositif de régulation un dispositif de contrôle de la distribution entre la ou les différentes sources de puissance électrique 1, le ou les différents dispositifs de stockage d'énergie de type chimique qui peuvent absorber et restituer de la puissance électrique, et le ou les différents dispositifs de stockage d'énergie de type thermique.

Avantageusement, le stockage chimique (batterie) peut servir de stockage temporaire (buffer), sur « le chemin » du stockage thermique (chauffe-eau), qui est une finalité du processus de conversion de l'énergie solaire en énergie thermique. En effet, selon un mode avantageux de l'invention, la fin du processus est toujours la chauffe (et non de pouvoir stocker l'énergie sous forme chimique).

Le dispositif de contrôle est programmable. Les instructions du programme sont enregistrées sur un support d'enregistrement lisible par ordinateur. Le dispositif de régulation dans la figure 1 comprend un dispositif de contrôle comportant une première unité de contrôle 12a pourvue d'un ordinateur (microcontrôleur) et d'autres unités de contrôle 12b, 12c,..., communiquant entre elles par voie filaire ou sans fil. Il est aussi envisageable de regrouper toutes les unités de contrôle dans un même appareil.

Le système en figure 1 comprend un chauffe-eau « secondaire » supplémentaire/satellite 6' présentant une cuve 6c avec un volume de stockage d'eau inférieur au chauffe-eau principal 6. Le chauffe-eau secondaire 6' est conçu pour garantir en permanence un volume d'eau chaude à disposition, par exemple, pour compenser le temps d'attente d'arrivée de l'eau chaude en cas de chauffe-eau principal 6 éloigné d'un point de puisage, ou pour assurer la disponibilité d'eau chaude à un point d'eau non raccordé à l'eau chaude mais uniquement à l'eau froide. Au même titre que le chauffe-eau principal 6, le chauffe-eau secondaire 6' peut assurer une eau avec une température plus élevée, permettant la disponibilité d'une eau bouillante immédiate. Le chauffe-eau satellite comprend un moyen de commutation (interrupteur) 22 pour connecter la résistance chauffante du bouilleur à la sortie du convertisseur CC/CC 13a. Avantageusement, la fermeture du moyen de commutation (interrupteur) 22 du bouilleur 6' peut servir à abaisser la tension vue par le chauffe-eau 6 en début de décharge du courant de la batterie 4 dans le chauffe-eau 6, de préférence la résistance thermique du bouilleur 6' étant choisie pour être compatible avec la tension maximale de la batterie 4.

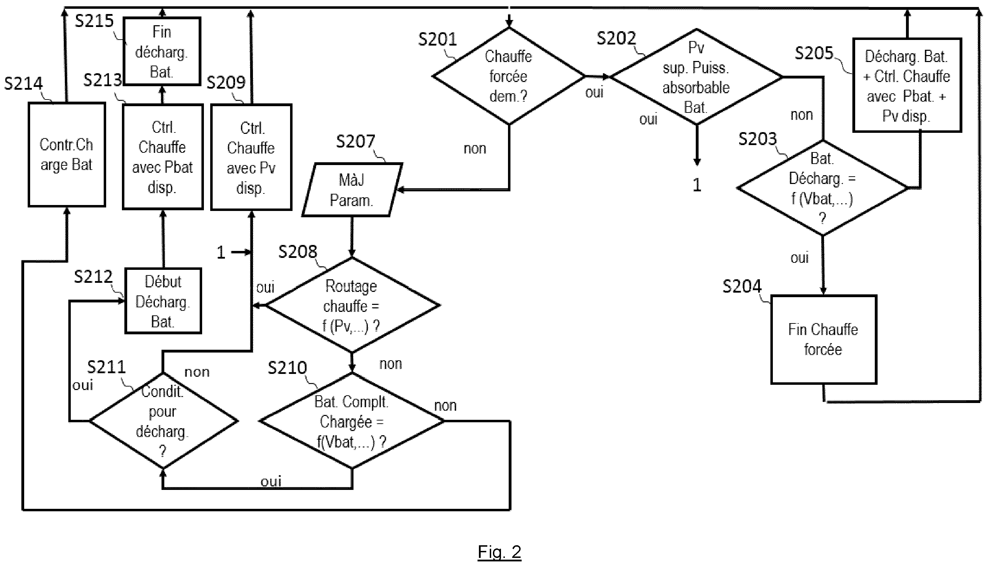

Pour mieux cerner le fonctionnement du dispositif de régulation, un programme (d'ordinateur) de contrôle enregistré dans l'unité de contrôle 12a et adapté au premier mode d'exécution est présenté en figure 2 sous forme d'organigramme (« flow chart »). Cet organigramme décrit une stratégie de contrôle pour un système comprenant un chauffe-eau, un panneau solaire et une batterie. Bien entendu, l'invention ne doit pas se limiter à cet exemple qui a pour objet d'expliquer et de partager les avantages apportés par le dispositif de régulation. En effet, le système de gestion 5 selon l'invention peut comporter plusieurs batteries, plusieurs chauffe-eaux et/ou plusieurs panneaux photovoltaïques. D'autres sources à courant continu sont aussi envisageables par exemple une ou plusieurs éoliennes. Il est à noter qu'une source aéroélectrique est liée à l'ensoleillement, par exemple, vent thermique. Par conséquent, l'enseignement du mode d'exécution avec un panneau solaire est transposable à une éolienne, mutatis mutandis.

Dans la figure 2, un point de départ possible pour expliquer la logique de contrôle est le test S201, dans lequel le dispositif de régulation teste si le chauffe-eau est dans un mode forcé, par exemple un mode de dégel ou une mode de chauffe forcée.

Le mode de dégel est enclenché automatiquement, lorsque le dispositif de régulation détecte que la température d'eau, dans l'une des deux cuves du chauffe-eau est inférieure à une valeur de référence, par exemple 5°C. Dans l'affirmative, le dispositif de régulation va déclencher une chauffe du dispositif de stockage d'énergie thermique, à savoir le chauffe-eau, et ce quel que soit l'état de charge de la batterie ou de la puissance de la source variable afin de prévenir tout risque de gel (S205). Lorsque la température de la ou des cuves concernées a retrouvé un niveau de température acceptable, par exemple, une température supérieure ou égale à la (ou une autre) valeur de référence, notamment 6°C, la chauffe sur décharge de la batterie est interrompue.

Le mode de chauffe forcée permet à l'utilisateur d'autoriser manuellement la décharge de la batterie pour chauffer le chauffe-eau pour obtenir rapidement de l'eau chaude (sanitaire) au cas où le dispositif de stockage d'énergie thermique (chauffe-eau) n'aurait plus d'eau chaude. L'activation peut se faire au travers, par exemple, d'un interrupteur ou équivalent. L'activation de ce bouton aura pour conséquence d'autoriser la chauffe du dispositif de stockage thermique (S205), en exploitant à la fois le courant de décharge de la batterie (si présent) et le courant produit par la source à courant continu. La combinaison de la décharge et de la puissance solaire permet d'accélérer le processus de chauffe de l'eau pour satisfaire au plus vite l'utilisateur. Dans ce cas de figure, la phase de décharge de la batterie est commandée même si la batterie n'est pas totalement (re)chargée. Amorcer une décharge d'une batterie partiellement (re)chargée n'est pas recommandé, et ce pour certains types de batteries comme celles au plomb, mais pas Lithium. La chauffe forcée se poursuit jusqu'à atteindre, par exemple, une tension limite basse correspondant à un état de charge critique de la batterie, dans lequel, l'énergie chimique disponible est faible. Cet état de la batterie dit déchargé peut être défini par une tension minimale de référence (S203). Cette tension dépend, entre autre, de type de batterie choisie (plomb, lithium, gel). L'utilisateur peut interrompre ce processus à son gré. Le dispositif de régulation peut être configuré pour mémoriser le recours à ce mode de chauffe forcée à des fins de levée éventuelle de garantie en cas d'usage excessif. Avant d'autoriser une décharge forcée combinée à une chauffe, il convient de vérifier que le courant produit par la source à courant continu n'est pas excessif à l'étape S202 pour ne pas endommager la batterie inutilement. Si la puissance de la source à courant est forte, il est inutile de décharger la batterie car la chauffe est déjà effective et élevée. Ce n'est que si les puissances de la source (à courant continu) variable est faible ou nulle qu'il convient de chauffer via décharge avant que la batterie ne soit totalement chargée. n

Lorsque la tension aux bornes de la batterie passe en dessous du seuil minimal de référence (S203), le mode de chauffe forcée est désactivé (S204). Après l'étape S204, le « programme/ l'ordinateur » retourne à l'étape S201 avant de réintégrer une boucle de l'organigramme permettant une optimisation du bilan énergétique et de l'utilisation de la batterie comme présenté ci-dessous.

Donc, si aucun de ces deux modes de fonctionnement particulier précités, à savoir le mode dégel ou chauffe forcée, n'est en cours, le dispositif de régulation reprend son fonctionnent autonome. Le fonctionnement autonome se caractérise essentiellement par deux stratégies de contrôle, à savoir, soit qu'il y a conversion du courant pour la chauffe, soit qu'il y a conversion du courant pour la charge. Toutefois, cette règle peut être dérogée lorsque la batterie est en fin de (re)charge. Dans de cas de figure la puissance solaire est affectée à la fois la (re)charge et la chauffe. Le programme passe de l'étape S201 à l'étape S207 au cours de laquelle les paramètres de fonctionnement du régulateur sont récupérées, par exemple, dans une mémoire connectée, par exemple, à une interface d'utilisateur.

Les paramètres de fonctionnement du dispositif de régulation peuvent comporter au moins un des trois modes de sollicitation de la batterie suivants: un premier mode dit intensif, un deuxième mode dit normal ou un troisième mode dit défensif. Ces modes permettent d'optimiser l'autoconsommation du système en fonction la durée de vie de la batterie et de la disponibilité d'eau chaude souhaitée.

Dans le cas du premier mode, les pertes stationnaires du système seront réduites, au profit du recours plus régulier à la batterie. Il est particulièrement avantageux si le chauffe-eau est placé dans un espace non chauffé. Ce mode est adapté à une ou plusieurs batteries ou aux parcs de batteries plus largement dimensionnés. Le premier mode par rapport aux deux autres modes, est celui qui permet la plus grande autoconsommation de la production photovoltaïque. Par ailleurs, le premier mode est défini de sorte que la batterie se comporte comme une extension de la première cuve du chauffe-eau, en termes de stockage d'énergie. De surcroît, le premier mode permet de (re)charger la batterie de manière prioritaire sur une plage de puissance solaire plus élevée que les autres modes, favorisant ainsi la (re)charge de la batterie pour réaliser plus assurément une chauffe par décharge nocturne. En d'autres termes, la deuxième cuve du chauffe-eau n'est, normalement, pas chauffée prioritairement et ce au profit de la charge complète préalable de la batterie. Pour cela, le dispositif de régulation s'assure que la batterie puisse se charger avec de faible ou de forte puissance photovoltaïque. En d'autre terme, la batterie est susceptible de se charger avec une puissance variable dont l'amplitude autorisée est large à condition que la première cuve soit déjà chauffée (par exemple : la température de l'eau de la première cuve TC1 dépasse une (première) température donnée notamment 60°). Cette condition sur la température de première cuve favorise une réserve énergétique de base. L'amplitude maximale de la puissance absorbable par la batterie, dans ces conditions, est, par exemple, limitée par un (premier) seuil de routage qui peut correspondre à la capacité d'absorption (c.-à-d. la puissance maximale de charge) de la batterie et peut prendre une valeur à titre d'exemple de 1250 W lorsque la batterie est peu ou partiellement chargée pour le premier mode d'exécution.

Dans le deuxième mode, la (re)charge de la batterie sera demandée lorsque la puissance instantanée de la source à courant continu est faible (par rapport aux puissances en jeu) et si la température de la deuxième cuve n'est pas encore chaude et, par exemple, est inférieure à une deuxième température donnée (par exemple TC2<60°C). La (re)charge de la batterie sera demandée, notamment, lorsque ladite puissance est inférieure à un (deuxième) seuil de routage donnée selon le deuxième mode, par exemple 325 W. Ce seuil faible permet d'assurer une plus grande réserve d'eau chaude que dans le premier mode car le stockage thermique est favorisé, améliorant ainsi la disponibilité d'eau chaude.

Par ailleurs, dans le deuxième mode, lorsque la deuxième cuve est suffisamment chaude (par exemple la température TC2 dépasse la (deuxième) température donné, (par exemple TC2 > 60°C)), la batterie est susceptible de se charger avec la puissance photovoltaïque dont l'amplitude autorisée est large. L'amplitude de la puissance absorbable, dans ces conditions, n'est, par exemple, limitée que par la capacité d'absorption de la batterie et peut prendre une valeur à titre d'exemple de 1250 W, correspondant à un (troisième) seuil de routage. Dans ces conditions, la réserve d'eau chaude est considérée comme suffisante et la chauffe de l'eau n'est plus vu comme une priorité absolue, puisque la disponibilité d'eau est déjà assurée.

Dans le troisième mode, la chauffe directe (à partir de la puissance photovoltaïque) de l'eau est encore plus favorisée que dans le deuxième mode, au travers par exemple, du choix du (deuxième) seuil de routage, qui est plus faible que celui du deuxième mode. La disponibilité immédiate de l'eau chaude sanitaire est ainsi augmentée. Le troisième mode est donc le mode parmi les trois modes qui garantit la meilleur disponibilité d'eau chaude.

Le troisième mode assure, comme pour le deuxième mode, que le chauffage de la deuxième cuve est prioritaire par rapport à la recharge de la batterie. La batterie n'est sollicitée que lorsque l'excédent solaire devient important, afin d'absorber les pics journaliers de production et restituer cette énergie dès la fin du puisage, augmentant ainsi la disponibilité de l'eau chaude sanitaire en période de production solaire importante. Ce mode est idéal dans les cas de puisage d'eau chaude concentrés à un moment de la journée (toutes les douches le matin, par exemple).

Dans le troisième mode, le (deuxième) seuil de routage de l'énergie vers la chauffe est abaissé d'environ (par exemple) environ 25% par rapport au (deuxième) seuil du deuxième mode (par exemple 325 W), à (par exemple) un seuil de 250 W. Cette mesure va réduire d'autant plus la durée de (re)charge journalière de la batterie au profit de la chauffe « directe ». Comme pour le deuxième mode, il est proposé dans le troisième mode, que la batterie absorbera le surplus de production solaire, que lorsque (la première) et la deuxième cuve seront chaudes (c.-à-d. la température TC1 et TC2 = 60°C par exemple).

Pour une configuration ou la puissance crête des panneaux est proche de la puissance maximale du système, la période hivernale favorise la (re)charge de la batterie et ce quel que soit le mode choisi sans nécessiter des adaptations complémentaires, car les intensités solaires sont faibles. En mi-saison, la (re)charge de la batterie capte les productions matinales ou de ciel couvert, jusqu'à charge compète de la batterie alors que les périodes ensoleillées de milieu de journée assurent déjà une chauffe. Si la batterie est chargée avant la fin de la journée, la production solaire de l'après-midi est affectée à la chauffe de l'eau dans les cuves. En période estivale, la puissance solaire étant importante, la charge des batteries est plus faible car l'intensité de production est souvent élevée. Par contre, la première cuve chauffe très vite, puis la deuxième cuve, si bien que le recours à la décharge de la batterie en fin de journée devient moins régulier. Vu que le temps de charge est réduit et intermittent, la batterie peut charger durant plusieurs jours avant d'être chargée complètement.

Pour pallier ce problème, il est avantageusement proposé qu' en fonction de l'état de charges et pour certains modèles de batteries, que les seuils peuvent être augmentés à partir d'un certain niveau de recharge, par exemple de 10% voire même 15%, afin de garantir la fin de charge pour rapide. Lorsque la puissance produite est supérieure à la capacité d'absorption de la batterie, soit en fonction de ses limites intrinsèques ou soit parce qu'elle est presque totalement chargée et ne peut plus absorber que de faible puissance, la charge se poursuit au maximum du quota absorbable et le surplus est affecté à la chauffe.

Les différents seuils de routage sont repris dans les tableaux 1 et 2 ci-dessous :

**Tableau 1: exemples de seuils de routage lorsque la puissance maximale d'absorption de la batterie est 1250 W.**

| | |
|---|---|
| Premier mode | Recharge bat. si : Pv< 1250 W et TC1>60°C |
| Deuxième mode | Recharge bat. si : (Pv< 325W (-85% à +10%) et TC2<60°C) ou (Pv< 1250 W si TC2>60°C)) |
| Troisième mode | Recharge bat. si : (Pv < 250W (-85% à +10%) et TC2<60°C) ou (Pv< 1250 W et TC2>60°C) |

**Tableau 2: exemples de plages de seuil de routage recommandées (en % par rapport à la puissance maximale d'absorption de la batterie)**

| | |
|---|---|
| Premier mode | Recharge bat. si : Pv< [80-100%] et TC1> [50°C-95°C] |
| Deuxième mode | Recharge bat. si : Pv (%) <[20%-60%] (-[60-100%] à [0-20%]) et TC2<[50°C-95°C]) ou si Pv< [80-100%] si TC2> [50°C-95°C] |
| Troisième mode | Recharge bat. si : (Pv(%) < [10%-40%] (-[60-100%] à [0-20%] ) et TC2<[50°C-95°C]) ou si Pv(%) < [80-100%] et TC2>[50°C-95°C] |

Une fois que les paramètres ont été chargés à l'étape S207, une ou plusieurs comparaisons sont effectuées au niveau du test S208 entre une ou plusieurs valeurs mesurées/estimées et une ou plusieurs valeurs/grandeurs de référence (par ex. température donnée , seuil de routage) définis précédemment au cours de l'étape S207.

Si la puissance variable de la source à courant continu Pv et la ou les températures de la ou des cuves sont telles que la ou aucune des conditions correspondant au mode choisi n'est respectée, le dispositif de régulation procède à un stockage de la puissance sous forme d'énergie thermique, à savoir la chauffe du dispositif de stockage d'énergie thermique (voir S209).

La chauffe du dispositif de stockage d'énergie thermique est réalisée à l'étape S209. Suivant l'intensité de la production Pv adressée vers les cuves, une ou plusieurs résistances sont commutées. Dans le cadre d'un chauffe-eau multi-cuve ou à stratification, un ordre de priorité est donné à l'élément chauffant de la cuve aval (6b) ou supérieur pour garantir la disponibilité de l'eau chaude plus rapide. Ce n'est que lorsque la première cuve (6b) ou la zone supérieur de la cuve à stratification est chaude que l'élément chauffant secondaire est activé. Le dispositif de régulation contrôle l'injection de courant en jouant sur le rapport de tension du convertisseur CC/CC (hacheur), de préférence de type « buck ». Le rapport de tension (rapport de transformation, en particulier le rapport cyclique) du convertisseur CC/CC est piloté par le dispositif de régulation afin de répondre au cahier de charges des résistances chauffantes du dispositif de stockage d'énergie de type thermique. Alternativement, la puissance peut servir à contrôler un ou des moteurs électriques à courant continu d'une pompe à chaleur, de préférence à débit variable.

De préférence, le convertisseur continu/continu (CC/CC) comprend une inductance afin d'optimiser la charge de l'au moins un disposition de stockage d'énergie chimiques (par exemple Batterie).

Le convertisseur continu/continu (CC/CC) selon l'invention peut comprendre en complément d'une self (inductance) pour stocker l'énergie électrique ou alternativement, un système de charge et décharge capacitive commandé par un interrupteur, notamment un MOSFET, qui permet de lisser la tension en entrée du convertisseur continu/continu (CC/CC) autour d'une tension assurant une optimisation de l'exploitation de l'au moins une source de à courant continu (par ex. un ou des panneaux solaires), tout en alimentant l'au moins un moyen de stockage d'énergie thermique avec une tension périodique avec des phases au cours desquelles la tension en sortie du convertisseur continu/continu (CC/CC) est sensible nulle.

Le dispositif de stockage d'énergie thermique (chauffe-eau) peut être configuré pour résister à des phases de surchauffe autorisées pour augmenter la capacité de stockage d'énergie thermique pour un volume donné. Par exemple, la température maximale de la première cuve et la température maximale de la deuxième cuve sont relevées, par exemple, à 90°C.

Si les conditions de chauffe par injection de puissance solaire ne sont pas remplies, la programme passe au test S210 au cours duquel l'état de charge de la batterie est comparé à un seuil de référence. L'état de charge peut être déterminé, entre autres, en mesurant la tension aux bornes de la batterie. Lorsque la tension mesurée dépasse un certain seuil prédéterminé, il peut être établi si la batterie est complètement chargée et donc que la phase de (re)charge prend fin. En fin de période de charge, la batterie absorbe progressivement moins de puissance. Si la puissance solaire est supérieure à cette puissance absorbable, le surplus de puissance peut être dévié directement sur la chauffe « directe » sans perte d'énergie électrique. Dans un mode de réalisation alternatif celui présenté dans la figure 2, le surplus de puissance peut être dévié directement sur la chauffe « directe » tout en maintenant la charge de la batterie.

De manière alternative, la fin de la phase de (re)charge de la batterie du test S211 peut être détecté lorsque le courant injecté chute en-dessous d'un seuil, par exemple 2 Ampère, non pas en raison d'une faible sortie du champ solaire mais parce que la batterie est entièrement chargée (courant de queue coupé / ou courant de maintien). Cette alternative de contrôle n'est pas représentée dans la figure 2.

Le test S211 sert à déterminer les conditions propices pour le lancement d'une décharge de la batterie, cette décharge servant à chauffer le dispositif de stockage d'énergie de type thermique (chauffe-eau). Une source à courant continu de type photovoltaïque est variable sur une même journée. Des interruptions de charge entrecoupées par des phases de décharge multiples seraient nocives pour une batterie et tout particulièrement pour une batterie de type gel. Ces interruptions peuvent être liées à des passages nuageux ou à des ombrages temporaires liés au déplacement de l'azimut du soleil.

Pour surmonter les problèmes décrits ci-dessus concernant l'amorçage de la décharge de la batterie, plusieurs stratégies de contrôle ont été élaborées et sont présentées ci-dessous. Ces stratégies peuvent être utilisées indépendamment ou en combinaison selon le besoin de l'utilisateur.

Premièrement, l'intérêt principal du stockage chimique est de permettre de reconstituer la réserve d'eau chaude la nuit pour une disponibilité accrue le matin en cas de consommation de fin de journée. La décharge sera dès lors par défaut nocturne. A cette fin, le dispositif de régulation ne va autoriser une décharge qu'après l'interruption de la session journalière (S211), pour autant qu'un élément chauffant prioritaire active une demande de chauffe. Si cette condition est respectée, le dispositif va amorcer la décharge. Une fois que la décharge de la batterie est demandée, le dispositif de régulation va contrôler la chauffe des cuves (S213). La chauffe s'effectue en connectant la batterie au chauffe-eau via le moyen de commutation (interrupteur). La chauffe s'effectue à la tension de charge de la batterie. L'élément chauffant est dimensionné pour fonctionner idéalement à cette tension. Certaines batteries en pleine charge peuvent avoir une tension supérieure à la tension admissible par l'élément chauffant. Dans ce cas, le moyen de commutation (interrupteur) (12b2) du chauffe-eau va réduire la tension pour que le maximum de puissance dissipable soit alloué au stockage thermique. Un ou plusieurs autres moyens de commutation (interrupteurs) 14, 22, 23 peuvent être activés transitoirement pour réduire la tension vue par le chauffe-eau. Lorsque la tension de la batterie sera abaissée en fin de réserve, la puissance de chauffe se verra réduite en proportion. Le régulateur n'autorise le fonctionnement de plusieurs éléments chauffants qu'en fonction des abaques de cyclages acceptable pour chaque type de batterie. En fonction de la taille des cuves à chauffer et de la taille du stockage chimique, il peut être autorisé des décharges à forte puissance via plusieurs éléments chauffants mais de durée limitée, ou pour des plus gros volumes à chauffer, des décharges lentes et peu puissantes, afin de garantir la durée de vie du stockage chimique. Une décharge nocturne permet d'éviter que les intermittences de production solaire sur une journée ne conduisent à des petites phases de décharges de courtes durées, saccadées, avec des fluctuations de tensions importantes sur des courts laps de temps.

Avantageusement; la stratégie de décharge peut être conçue pour limiter la force de décharge ou la profondeur de décharge ou une décharge sans charge de renforcement afin de maximiser le nombre de cycles de décharges. Par exemple, limiter la force de décharge en modulant la puissance absorbée par la charge (par ex. en modulant le nombre de consommateurs, en particulier les résistances thermiques (par ex. disposées en parallèle) et/ou en modulant le puissance absorbée par la ou les pompes à chaleur à débit variable) ou en limitant le volume de décharge possible (décharge forcée limitée à max 80% de décharge) ou les volumes d'eau à chauffer (chauffe que la première cuve).

Deuxièmement, il est recommandé de charger complètement une batterie, pour certains types de batteries, en particulier les batteries au plomb et éventuellement même avec une phase de renforcement suffisante avant d'autoriser sa décharge. Cette deuxième mesure vise donc à empêcher une nouvelle décharge alors que la (re)charge n'a pas été suffisante depuis la situation totalement déchargée. Cette mesure permet de réduire le nombre de cycle et ainsi augmenter la durée de vie de la batterie. Il est possible de modifier le seuil de tension pour s'adapter à divers types de batteries. Le temps de charge de la batterie peut servir aussi de critère pour déterminer le niveau de charge d'une batterie. Cette mesure permet une charge intermittente en cas de période nuageuse entrecoupée par des périodes de soleil. Le comptage du temps de charge tient compte de l'intermittence. Ce critère peut être utilisé en tant qu'alternative à la détection de tension ou en tant que mesure complémentaire pour déterminer les conditions propices à une décharge de batterie.

Troisièmement, pour réaliser un traitement thermique contre la légionnelle, il peut également être utile de s'assurer que le traitement puisse être réalisé complètement, avant d'autoriser de prélever de l'eau tiédie sans danger. Pour ce faire, il faut s'assurer que la batterie soit suffisamment chargée avant de lancer un traitement thermique et ce quel que soit l'ensoleillement de la journée, de sorte que le traitement puisse être réalisé complètement et rapidement. La logique de contrôle du traitement anti-légionnelle n'est pas représentée en figure 2.

Dans la figure 2, l'étape S214 se rapporte au contrôle de la (re)charge de la batterie. Comme exposé dans les paragraphes précédents, le contrôle de la charge de la batterie peut prendre différentes formes : charge flottante, charge d'équilibrage. Ces modes font figure d'exception car le contrôle de la charge le plus courant comprend une première phase dite rapide dans laquelle la tension augmente jusqu'à un certain seuil au-delà duquel, le dispositif de régulation réduit le courant de charge progressivement. La (re)charge de la batterie est contrôlée par le dispositif de régulation qui fait varier le rapport de tension entre l'entrée et la sortie du convertisseur CC/CC 13a.

Si la période d'absorption est interrompue en raison d'un nuage ou d'une bascule vers la chauffe, le processus d'absorption est suspendu. La charge de la batterie reprendra plus tard dans la journée lorsque les conditions de routage seront plus favorables.

Le test S215 permet de mettre fin à la phase de décharge de la batterie et la prémunir de toute décharge complémentaire intempestive (Coupe-circuit). Cette mesure permet d'éviter une décharge profonde de la batterie qui est très dommageable pour sa durée de vie. Afin de pallier ce problème, il est proposé de manière avantageuse, qu'une tension limite minimale soit définie, par exemple selon le mode défini par l'utilisateur. Cette tension limite peut être soit une limite basse de la batterie (une tension minimale est prédéfinie, par exemple 45 V), soit cette limite avec un coefficient de sécurité, soit sur base d'un autre critère. Cette tension dépend du type de batterie utilisée, du nombre de cellules, etc... La tension peut être réglée manuellement pour s'adapter aux caractéristiques de la batterie. De plus, lorsqu'il y a sous-tension, le dispositif de régulation n'autorise la fermeture du circuit que si la tension est substantiellement supérieure à la tension minimale. Par exemple une valeur de coupe circuit à 46 V et une valeur réarmement à 51,2 V sont choisies. Le choix d'une tension de réarmement plus élevé que la tension minimale garantit une charge solaire certaine. Cette stratégie de contrôle s'inscrit dans la logique de contrôle de la décharge de la batterie. De manière alternative, la décharge peut être interrompue sur base d'autres critère comme la détection de la fin de la chauffe de la première cuve.

La figure 2 permet de mieux comprendre l'invention mais ne restreint pas sa portée. Toutes modifications sont envisageables pour autant qu'elles restent dans la portée des revendications. Par exemple, il est envisageable que d'autres appareils soient raccordés, capables de stockage thermique mais avec des règles de priorités très différentes (par exemple avec des réservoirs très petits comme des bouilleurs satellites de petite contenance, 6'), ou des consommateurs électriques 21 par exemple en DC, pour lesquels, le système est capable d'adapter automatiquement la tension à ses besoins.

Un dispositif de régulation est conçu pour s'adapter à une puissance maximale donnée. Cependant, la puissance nominale cumulée des sources de tension à courant continu et celle des dispositifs de stockage peuvent être bien supérieures à la puissance nominale du dispositif de régulation. Pour ce faire, plusieurs dispositifs de régulation peuvent être combinés pour contrôler la puissance nominale élevée. Cette modularité permet d'adapter facilement le système de gestion aux besoins d'une habitation allant d'un domicile pour deux personnes à un immeuble comportant plusieurs appartements. Le dispositif de régulation peut comporter une interface dédiée permettant une communication avec un autre ou plusieurs autres dispositifs de régulation collaborant.

La figure 3 montre le premier mode d'exécution du dispositif de gestion sous forme simplifiée. Cette figure servira de base de comparaison pour mieux comprendre les différences avec les autres modes d'exécution selon les figures 4, 5, 6, 8a et 8b.

La figure 4 montre un deuxième mode d'exécution du système de gestion comprenant un dispositif de stockage avec une pompe à chaleur avec deux échangeurs de chaleurs à la place des deux résistances chauffantes. La pompe à chaleur comprend une pompe entraînée par un moteur électrique. De surcroît, la pompe à chaleur peut comprendre une vanne de contrôle pour réguler le flux du fluide réfrigérant entre le premier et le deuxième échangeur. Le système de gestion ne comprend pas de chauffe-eau satellite 6'.

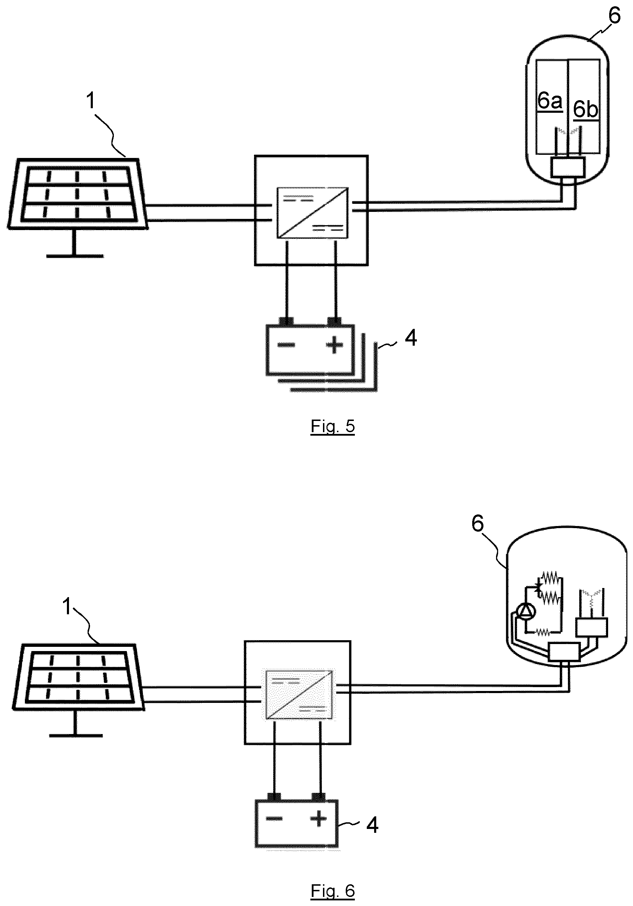

La figure 5 montre un troisième mode d'exécution du dispositif de gestion qui diffère du premier mode d'exécution selon la figure 3 en ce que qu'il ne comprend pas de chauffe-eau satellite 6'.

La figure 6 montre un quatrième mode d'exécution du dispositif de gestion. Le dispositif de stockage d'énergie thermique comporte 3 résistances chauffantes combinées avec une pompe à chaleur. Le système de gestion ne comprend pas de chauffe-eau satellite 6'.

Dans la figure 1, le dispositif électronique de puissance 13 peut être contrôlé tant par le microcontrôleur 12a que par le microcontrôleur 12b ou 12c situé dans le (ou les) chauffe-eau(x). Ces derniers adaptent le rapport entre la source à courant continu et l'un des dispositifs de stockage au travers du convertisseur de tension CC/CC 13a. Les microcontrôleurs, communiquant entre eux, dédient le courant au dispositif de stockage souhaité, comme une sorte d'aiguillage, par la commande des moyens de commutation (interrupteur, par ex. Mosfet) pour sélectionner les circuits à connecter. Le dispositif électronique de puissance 13, peut comporter dans une exécution alternative un moyen de commutation (un commutateur) 13b centralisé comme illustré symboliquement en figure 7a sous forme d'un aiguillage, à la place d'interrupteurs dispersés comme illustrés en figure 1 et 7b.

La figure 7b montre les composants du dispositif électronique de puissance 13 selon la figure 1, à savoir le convertisseur cc/cc 13a et un moyen de commutation (interrupteur) 13b2 dédié à la batterie 4. La figure 7 montre en outre des moyens de commutation 13b1 dédiés à la première et la deuxième source de chaleur du chauffe-eau 4. Dans la figure 7, les moyens de commutation (interrupteurs) 13b1 ne sont pas disposés dans le dispositif électronique de puissance 13. Le moyen de commutation (interrupteur) 22 du chauffe-eau satellite 6' n'est pas représenté.

Dans un mode d'exécution non représenté, un ou plusieurs moyens de commutation (par ex. interrupteurs) pourraient être envisagés au niveau des bornes d'entrée pour connecter le convertisseur à plusieurs sources à courant continu. Alternativement, le dispositif d'électronique de puissance pourrait comporter un ou plusieurs convertisseurs CC/CC avec plusieurs entrées et plusieurs sorties sélectionnables.

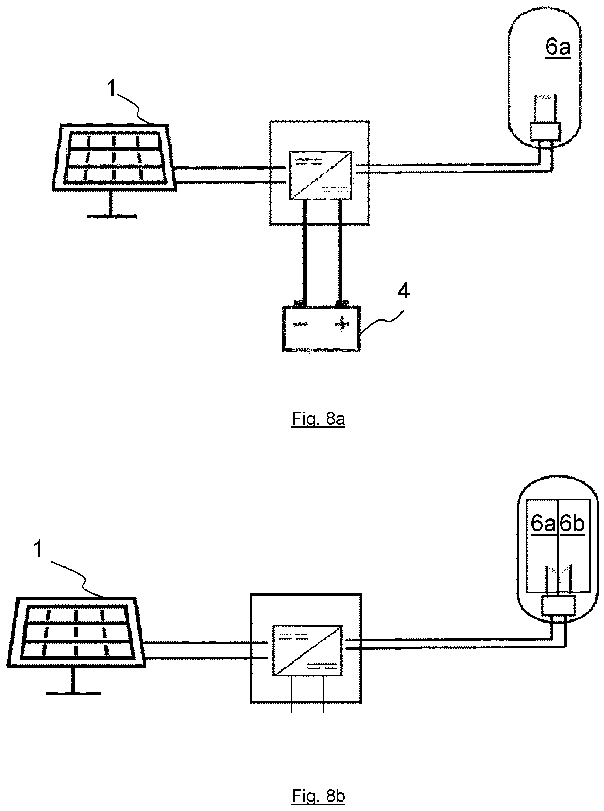

La figure 8a montre un cinquième mode d'exécution du dispositif de gestion selon l'invention (non revendiqué) sous forme simplifiée. Ce mode diffère du premier mode d'exécution en ce qu'il ne comprend qu'une seule source de chaleur disposée dans une cuve 6a.

La figure 8b montre un sixième mode d'exécution du dispositif de gestion (non revendiqué) sous forme simplifiée. Ce mode diffère du premier mode d'exécution en ce qu'il ne comprend pas de dispositif de stockage d'énergie du type chimique 4 et qu'il ne comprend pas de chauffe-eau satellite 6' (bouilleur). Cette configuration serait rencontrée lorsqu'un utilisateur renonce à utiliser une batterie. Ce mode d'exécution reste très avantageux car il combine la possibilité d'un « maximal power point tracking » avec une modularité de résistances chauffantes, nonobstant que l'utilisateur a toujours l'option de rajouter une batterie ultérieurement car les connections/connecteurs sont déjà intégrés par exemple sur le dispositif électronique de puissance 13.

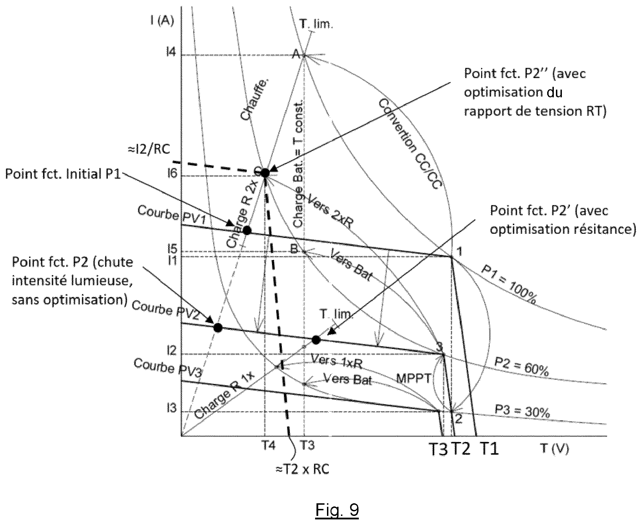

La figure 9 présente les caractéristiques idéalisées (Courbes PV1, PV2, PV3) d'un panneau solaire dans un graphique tension/courant (abscisse/ordonnée). Il est fait comme hypothèse qu'un convertisseur (courant)continu/(courant)continu est interposé entre la source à courant continu 1 de type photovoltaïque et le chauffe-eau 6 représenté de manière idéalisée par une ou deux résistances chauffantes (Charge R 1x, Charge R2x) se traduisant par une droite dans une représentation tension/courant. Une pompe à chaleur comprenant un moteur électrique peut être aussi définie dans cette représentation (I-V) par un réseau de courbes dépendant par exemple de la température extérieure. Dans la figure 9, l'image de la source photovoltaïque est représentée idéalement par un réseau de droites sous forme de plateau avec une pente légère, dont l'étagement est lié à l'intensité solaire disponible. A delà d'un certain seuil, les droites présentent une cassure et décroissent avec une pente plus sévère. Le point de fonctionnement P1 initial se trouve, par exemple, à l'intersection entre le plateau présentant une intensité lumineuse (PV1) et la droite correspondant à la résistance chauffante R 2x (Charge R2x) correspondant à deux résistances R disposées en parallèles. Lorsque l'intensité lumineuse baisse, le point de fonctionnement se déplace P2 et se positionne à l'intersection entre la droite correspondant à la résistance chauffante Charge R2x et la caractéristique I-V de la source à courant continu associée au deuxième seuil d'intensité PV2. On observe une chute de la puissance disponible pour chauffer l'eau dans la chauffe-eau (voir champ d'hyperboles d'iso-puissance). On constate aussi que la puissance fournie est en-deçà de la puissance maximale potentielle que pourrait fournir la source à courant continu.

L'invention a pour objet de résoudre le problème énoncé au paragraphe précédent, à savoir comment compenser toute sous exploitation de la source à courant continu et à puissance variable, en particulier photovoltaïque. Dans l'état de l'art, il a, par exemple, été proposé d'utiliser des résistances chauffantes modulables (disposée en parallèle dans EP3404334). Dans le figure 9, le point de fonctionnement P2' à l'intersection entre la droite correspondant à la résistance simple chauffante R 1x (Charge R1x), soit une seule résistance) et la caractéristique I-V de la source à courant continu associé au deuxième seuil d'intensité PV2. Cette approche fait cependant perdre une grande part de l'énergie produite car si la puissance produite n'est pas suffisante, ni corrélée à la valeur de résistance, la résistance ne chauffera pas ou peu. Si la production dépasse la capacité de la résistance, le surplus sera perdu, et la seconde résistance ne s'activera pas, et ainsi de suite.

La présente invention propose de résoudre le problème de rechercher le point de puissance maximale de la production en jouant sur le rapport de tension (moyenné car il oscille légèrement à la fréquence de hachage) entre l'entrée et la sortie du convertisseur, en particulier en jouant sur le rapport de transformation, par exemple le rapport cyclique, du convertisseur CC/CC. Aussi, le convertisseur peut être un convertisseur du type buck, boost ou buck-boost. Le résultat est présenté dans la figure 9 où l'on peut observer que le point de fonctionnement du système P2" est ajusté de façon à ce qu'il se positionne dans une zone de puissance maximale disponible. Bien entendu, le convertisseur CC/CC présente des pertes et le point de fonctionnent viendra se positionner légèrement en dessous de l'hyperbole d'iso puissance. On peut aussi constater que la caractéristique de la source à courant continu, en particulier une source photovoltaïque lorsqu'elle vue du côté de la sortie du convertisseur, subit une transformation forme avec une dilatation selon l'ordonnée et une contraction selon l'abscisse. Dans la figure 9, l'adaptation du convertisseur permet de réduire la tension vue de la sortie du convertisseur mais d'augmenter le courant au niveau de la sortie du convertisseur. Cette souplesse d'exploitation est bien entendu transposable à un chauffe-eau dont la ou les sources de chaleur pour chauffer l'eau sont un ou des échangeurs d'une pompe à chaleur. Ainsi, le besoin en énergie électrique du ou des moteurs électriques de la pompe à chaleur peut être ajusté au mieux.

Pour trouver le point de fonctionnement idéal, l'unité de contrôle suit (en temps réel) la tension et/ou le courant au pour déterminer la puissance absorbée. Cette puissance peut être comparé avec un puissance de référence cartographie en fonction par exemple d'intensité lumineuse, d'une température de référence, etc... Dans ce cas de figure, l'unité de contrôle pilote le convertisseur CC/CC au travers du rapport cyclique (rapport de transformation) par exemple pour que la puissance fournie en temps réel atteigne la puissance de consigne au moyen de régulateur de type PI, PID, réseaux neuronaux etc. Dans un mode alternatif, le contrôle peut être basé sur un algorithme d'optimisation dans lequel l'unité de contrôle va balayer une plage de valeurs de rapport cyclique est détecter l'optimum qui servira de réglage final. Ce mode de fonctionnent combiné avec l'utilisation d'une batterie présente des synergies car le même convertisseur CC/CC peut être utilisé pour la (re)charge de la batterie. Le pilotage fin du rapport de tension sera exploité pour charger la ou les batteries et améliorer ainsi leur durée de vie. Comme évoqué, le système de gestion peut aussi comporter deux résistances chauffantes commandées indépendamment via par exemple deux moyens de commutation (interrupteurs/relais) respectifs, au lieu d'une seule résistance chauffante comme présenté dans le cinquième mode d'exécution. L'utilisation d'un convertisseur CC/CC et deux résistances (voire même plus de deux) alimentées en courant de manière indépendante l'une de l'autre apporte aussi des synergies, permettant ainsi d'extraire au mieux la puissance disponible. Egalement, la présence d'au moins deux résistances alimentées en courant de manière indépendante permet de contrôler avantageusement la décharge de la ou des batteries. Par exemple, la valeur d'une des résistances chauffantes peut être définie en fonction des caractéristiques de la batterie pour exploiter au mieux la décharge de la batterie. Mais aussi, le système de gestion peut compter plusieurs dispositifs de stockage d'énergie, en particulier d'énergie de type thermique présentant des niveaux de puissances différents (grand vs petit chauffe-eau) et donc des résistances chauffantes différentes.

Les deux résistances (voire même plus de deux) alimentées en courant de manière indépendante peuvent être contrôlée avec PWM (Pulse width modulation). De préférence, les signaux de contrôle des interrupteurs 13b1, 13b2 peuvent être déphasés de sorte que le courant cumulée fourni reste sensiblement constant.

On entend par connecteur électrique, un moyen qui permettent d'établir une connexion entre des systèmes électriques distincts (source à courant continu à puissance variable / dispositif de régulation / dispositif de stockage d'énergie). Ce moyen de connexion peut comprendre : une prise, un connecteur, voir même, une soudure, cosses, bornier entre deux conducteurs par exemple.

On entend par moyen de commutation, un moyen qui permet avec un ou d'autres moyens de commutation de choisir un ou plusieurs circuits électriques. Un moyen de commutation peut comprendre au moins un interrupteur interposé entre par exemple la sortie du convertisseur continu/continu et l'au moins un dispositif de stockage d'énergie ( thermique et/ou chimique) et au moins un interrupteur interposé entre par exemple l'entrée du convertisseur continu/continu et l'au moins une source à courant continu.

Nonobstant le fait que la présente invention ait été exposée au moyen d'une description détaillée explicitant une variante d'exécution et différents aspects de l'invention, l'homme de l'art verra que la portée complète de l'invention n'est nullement limitée à l'exemple présenté ici. L'invention a une portée qui est proportionnelle aux revendications du présent brevet, incluant tous les éléments ou aspects qui seraient considérés comme équivalents à ceux exposés dans les revendications principales ou dépendantes.

### Liste des symboles de référence

1. source à courant continu à puissance variable (par ex. énergie électrique renouvelable, notamment panneau photovoltaïque)
2. disjoncteur
3. capteur (tension + intensité)
4. dispositif de stockage d'énergie chimique (par ex. batterie)
5. système de gestion
5a. éléments du dispositif de régulation
5b. boiler maître ou autre équipement électrique CC modulable à tampon
5c. boiler satellite ou autre équipement électrique DC modulable à tampon
5d. contrôleur d'accessoire électrique secondaire
6. dispositif de stockage d'énergie thermique (par ex. chauffe-eau avec une ou plusieurs cuves)
6a. deuxième cuve (amont)
6b. première cuve (aval)
6'. dispositif de stockage d'énergie thermique (bouilleur) satellite (optionnel)
6c. cuve bouilleur
8. résistance chauffante CC ou autre équipement CC contrôlable (ex. : pompe à chaleur)
9. résistance chauffante CA (optionnel)
10. sonde de température
11. capteur de présence d'eau (optionnel)
12. dispositif de contrôle
12a. unité de contrôle du convertisseur
12b. unité de contrôle de chauffe CC
12c. unité de contrôle de chauffe CA (optionnel)
12d. unité de contrôle d'un accessoire électrique secondaire
13. dispositif d'électronique de puissance
13a. convertisseur (de tension) (CC/CC)/hacheur (de type « buck »)
13b1. moyen de commutation (commutateur)(interrupteur) de courant pour le chauffe-eau
13b2. moyen de commutation (commutateur)(interrupteur) de courant pour la batterie
14. coupe-circuit batterie
15. fusible
16. raccord à la prise de terre
17. raccord au réseau électrique en courant alternatif (optionnel)
18. vanne 3 voies motorisée (optionnel)
19. câble bus
20. basculeur (optionnel - uniquement grand parc photovoltaïque)
21. accessoire électrique secondaire
22. moyen de commutation (commutateur)(interrupteur) pour le bouilleur
23. moyen de commutation (commutateur)(interrupteur) pour l'accessoire électrique secondaire puissance nominale du dispositif de régulation. Pour ce faire, plusieurs dispositifs de régulation peuvent être combinés pour contrôler la puissance nominale élevée. Cette modularité permet d'adapter facilement le système de gestion aux besoins d'une habitation allant d'un domicile pour deux personnes à un immeuble comportant plusieurs appartements. Le dispositif de régulation peut comporter une interface dédiée permettant une communication avec un autre ou plusieurs autres dispositifs de régulation collaborant.

La figure 3 montre le premier mode d'exécution du dispositif de gestion sous forme simplifiée. Cette figure servira de base de comparaison pour mieux comprendre les différences avec les autres modes d'exécution selon les figures 4, 5, 6, 8a et 8b.

La figure 4 montre un deuxième mode d'exécution du système de gestion comprenant un dispositif de stockage avec une pompe à chaleur avec deux échangeurs de chaleurs à la place des deux résistances chauffantes. La pompe à chaleur comprend une pompe entraînée par un moteur électrique. De surcroît, la pompe à chaleur peut comprendre une vanne de contrôle pour réguler le flux du fluide réfrigérant entre le premier et le deuxième échangeur. Le système de gestion ne comprend pas de chauffe-eau satellite 6'.

La figure 5 montre un troisième mode d'exécution du dispositif de gestion qui diffère du premier mode d'exécution selon la figure 3 en ce que qu'il ne comprend pas de chauffe-eau satellite 6'.

La figure 6 montre un quatrième mode d'exécution du dispositif de gestion. Le dispositif de stockage d'énergie thermique comporte 3 résistances chauffantes combinées avec une pompe à chaleur. Le système de gestion ne comprend pas de chauffe-eau satellite 6'.

Dans la figure 1, le dispositif électronique de puissance 13 peut être contrôlé tant par le microcontrôleur 12a que par le microcontrôleur 12b ou 12c situé dans le (ou les) chauffe-eau(x). Ces derniers adaptent le rapport entre la source à courant continu et l'un des dispositifs de stockage au travers du convertisseur de tension CC/CC 13a. Les microcontrôleurs, communiquant entre eux, dédient le courant au dispositif de stockage souhaité, comme une sorte d'aiguillage, par la commande des moyens de commutation (interrupteur, par ex. Mosfet) pour sélectionner les circuits à connecter. Le dispositif électronique de puissance 13, peut comporter dans une exécution alternative un moyen de commutation (un commutateur) 13b centralisé comme illustré symboliquement en figure 7a sous forme d'un aiguillage, à la place d'interrupteurs dispersés comme illustrés en figure 1 et 7b.

La figure 7b montre les composants du dispositif électronique de puissance 13 selon la figure 1, à savoir le convertisseur cc/cc 13a et un moyen de commutation (interrupteur) 13b2 dédié à la batterie 4. La figure 7 montre en outre des moyens de commutation 13b1 dédiés à la première et la deuxième source de chaleur du chauffe-eau 4. Dans la figure 7, les moyens de commutation (interrupteurs) 13b1 ne sont pas disposés dans le dispositif électronique de puissance 13. Le moyen de commutation (interrupteur) 22 du chauffe-eau satellite 6' n'est pas représenté.

Dans un mode d'exécution non représenté, un ou plusieurs moyens de commutation (par ex. interrupteurs) pourraient être envisagés au niveau des bornes d'entrée pour connecter le convertisseur à plusieurs sources à courant continu. Alternativement, le dispositif d'électronique de puissance pourrait comporter un ou plusieurs convertisseurs CC/CC avec plusieurs entrées et plusieurs sorties sélectionnables.

La figure 8a montre un cinquième mode d'exécution du dispositif de gestion selon l'invention (non revendiqué) sous forme simplifiée. Ce mode diffère du premier mode d'exécution en ce qu'il ne comprend qu'une seule source de chaleur disposée dans une cuve 6a.

La figure 8b montre un sixième mode d'exécution du dispositif de gestion (non revendiqué) sous forme simplifiée. Ce mode diffère du premier mode d'exécution en ce qu'il ne comprend pas de dispositif de stockage d'énergie du type chimique 4 et qu'il ne comprend pas de chauffe-eau satellite 6' (bouilleur). Cette configuration serait rencontrée lorsqu'un utilisateur renonce à utiliser une batterie. Ce mode d'exécution reste très avantageux car il combine la possibilité d'un « maximal power point tracking » avec une modularité de résistances chauffantes, nonobstant que l'utilisateur a toujours l'option de rajouter une batterie ultérieurement car les connections/connecteurs sont déjà intégrés par exemple sur le dispositif électronique de puissance 13.

La figure 9 présente les caractéristiques idéalisées (Courbes PV1, PV2, PV3) d'un panneau solaire dans un graphique tension/courant (abscisse/ordonnée). Il est fait comme hypothèse qu'un convertisseur (courant)continu/(courant)continu est interposé entre la source à courant continu 1 de type photovoltaïque et le chauffe-eau 6 représenté de manière idéalisée par une ou deux résistances chauffantes (Charge R 1x, Charge R2x) se traduisant par une droite dans une représentation tension/courant. Une pompe à chaleur comprenant un moteur électrique peut être aussi définie dans cette représentation (I-V) par un réseau de courbes dépendant par exemple de la température extérieure. Dans la figure 9, l'image de la source photovoltaïque est représentée idéalement par un réseau de droites sous forme de plateau avec une pente légère, dont l'étagement est lié à l'intensité solaire disponible. A delà d'un certain seuil, les droites présentent une cassure et décroissent avec une pente plus sévère. Le point de fonctionnement P1 initial se trouve, par exemple, à l'intersection entre le plateau présentant une intensité lumineuse (PV1) et la droite correspondant à la résistance chauffante R 2x (Charge R2x) correspondant à deux résistances R disposées en parallèles. Lorsque l'intensité lumineuse baisse, le point de fonctionnement se déplace P2 et se positionne à l'intersection entre la droite correspondant à la résistance chauffante Charge R2x et la caractéristique I-V de la source à courant continu associée au deuxième seuil d'intensité PV2. On observe une chute de la puissance disponible pour chauffer l'eau dans la chauffe-eau (voir champ d'hyperboles d'iso-puissance). On constate aussi que la puissance fournie est en-deçà de la puissance maximale potentielle que pourrait fournir la source à courant continu.

L'invention a pour objet de résoudre le problème énoncé au paragraphe précédent, à savoir comment compenser toute sous exploitation de la source à courant continu et à puissance variable, en particulier photovoltaïque. Dans l'état de l'art, il a, par exemple, été proposé d'utiliser des résistances chauffantes modulables (disposée en parallèle dans EP3404334). Dans le figure 9, le point de fonctionnement P2' à l'intersection entre la droite correspondant à la résistance simple chauffante R 1x (Charge R1x), soit une seule résistance) et la caractéristique I-V de la source à courant continu associé au deuxième seuil d'intensité PV2. Cette approche fait cependant perdre une grande part de l'énergie produite car si la puissance produite n'est pas suffisante, ni corrélée à la valeur de résistance, la résistance ne chauffera pas ou peu. Si la production dépasse la capacité de la résistance, le surplus sera perdu, et la seconde résistance ne s'activera pas, et ainsi de suite.

La présente invention propose de résoudre le problème de rechercher le point de puissance maximale de la production en jouant sur le rapport de tension (moyenné car il oscille légèrement à la fréquence de hachage) entre l'entrée et la sortie du convertisseur, en particulier en jouant sur le rapport de transformation, par exemple le rapport cyclique, du convertisseur CC/CC. Aussi, le convertisseur peut être un convertisseur du type buck, boost ou buck-boost. Le résultat est présenté dans la figure 9 où l'on peut observer que le point de fonctionnement du système P2" est ajusté de façon à ce qu'il se positionne dans une zone de puissance maximale disponible. Bien entendu, le convertisseur CC/CC présente des pertes et le point de fonctionnent viendra se positionner légèrement en dessous de l'hyperbole d'iso puissance. On peut aussi constater que la caractéristique de la source à courant continu, en particulier une source photovoltaïque lorsqu'elle vue du côté de la sortie du convertisseur, subit une transformation forme avec une dilatation selon l'ordonnée et une contraction selon l'abscisse. Dans la figure 9, l'adaptation du convertisseur permet de réduire la tension vue de la sortie du convertisseur mais d'augmenter le courant au niveau de la sortie du convertisseur. Cette souplesse d'exploitation est bien entendu transposable à un chauffe-eau dont la ou les sources de chaleur pour chauffer l'eau sont un ou des échangeurs d'une pompe à chaleur. Ainsi, le besoin en énergie électrique du ou des moteurs électriques de la pompe à chaleur peut être ajusté au mieux.

Pour trouver le point de fonctionnement idéal, l'unité de contrôle suit (en temps réel) la tension et/ou le courant au pour déterminer la puissance absorbée. Cette puissance peut être comparé avec un puissance de référence cartographie en fonction par exemple d'intensité lumineuse, d'une température de référence, etc... Dans ce cas de figure, l'unité de contrôle pilote le convertisseur CC/CC au travers du rapport cyclique (rapport de transformation) par exemple pour que la puissance fournie en temps réel atteigne la puissance de consigne au moyen de régulateur de type PI, PID, réseaux neuronaux etc. Dans un mode alternatif, le contrôle peut être basé sur un algorithme d'optimisation dans lequel l'unité de contrôle va balayer une plage de valeurs de rapport cyclique est détecter l'optimum qui servira de réglage final. Ce mode de fonctionnent combiné avec l'utilisation d'une batterie présente des synergies car le même convertisseur CC/CC peut être utilisé pour la (re)charge de la batterie. Le pilotage fin du rapport de tension sera exploité pour charger la ou les batteries et améliorer ainsi leur durée de vie. Comme évoqué, le système de gestion peut aussi comporter deux résistances chauffantes commandées indépendamment via par exemple deux moyens de commutation (interrupteurs/relais) respectifs, au lieu d'une seule résistance chauffante comme présenté dans le cinquième mode d'exécution. L'utilisation d'un convertisseur CC/CC et deux résistances (voire même plus de deux) alimentées en courant de manière indépendante l'une de l'autre apporte aussi des synergies, permettant ainsi d'extraire au mieux la puissance disponible. Egalement, la présence d'au moins deux résistances alimentées en courant de manière indépendante permet de contrôler avantageusement la décharge de la ou des batteries. Par exemple, la valeur d'une des résistances chauffantes peut être définie en fonction des caractéristiques de la batterie pour exploiter au mieux la décharge de la batterie. Mais aussi, le système de gestion peut compter plusieurs dispositifs de stockage d'énergie, en particulier d'énergie de type thermique présentant des niveaux de puissances différents (grand vs petit chauffe-eau) et donc des résistances chauffantes différentes.

Les deux résistances (voire même plus de deux) alimentées en courant de manière indépendante peuvent être contrôlée avec PWM (Pulse width modulation). De préférence, les signaux de contrôle des interrupteurs 13b1, 13b2 peuvent être déphasés de sorte que le courant cumulée fourni reste sensiblement constant.

On entend par connecteur électrique, un moyen qui permettent d'établir une connexion entre des systèmes électriques distincts (source à courant continu à puissance variable / dispositif de régulation / dispositif de stockage d'énergie). Ce moyen de connexion peut comprendre : une prise, un connecteur, voir même, une soudure, cosses, bornier entre deux conducteurs par exemple.

On entend par moyen de commutation, un moyen qui permet avec un ou d'autres moyens de commutation de choisir un ou plusieurs circuits électriques. Un moyen de commutation peut comprendre au moins un interrupteur interposé entre par exemple la sortie du convertisseur continu/continu et l'au moins un dispositif de stockage d'énergie ( thermique et/ou chimique) et au moins un interrupteur interposé entre par exemple l'entrée du convertisseur continu/continu et l'au moins une source à courant continu.

Nonobstant le fait que la présente invention ait été exposée au moyen d'une description détaillée explicitant une variante d'exécution et différents aspects de l'invention, l'homme de l'art verra que la portée complète de l'invention n'est nullement limitée à l'exemple présenté ici. La portée de l'invention est définie par les revendications.

### Liste des symboles de référence

1. source à courant continu à puissance variable (par ex. énergie électrique renouvelable, notamment panneau photovoltaïque)
2. disjoncteur
3. capteur (tension + intensité)
4. dispositif de stockage d'énergie chimique (par ex. batterie)
5. système de gestion
5a. éléments du dispositif de régulation
5b. boiler maître ou autre équipement électrique CC modulable à tampon
5c. boiler satellite ou autre équipement électrique DC modulable à tampon
5d. contrôleur d'accessoire électrique secondaire
6. dispositif de stockage d'énergie thermique (par ex. chauffe-eau avec une ou plusieurs cuves)
6a. deuxième cuve (amont)
6b. première cuve (aval)
6'. dispositif de stockage d'énergie thermique (bouilleur) satellite (optionnel)
6c. cuve bouilleur
8. résistance chauffante CC ou autre équipement CC contrôlable (ex. : pompe à chaleur)
9. résistance chauffante CA (optionnel)
10. sonde de température
11. capteur de présence d'eau (optionnel)
12. dispositif de contrôle
12a. unité de contrôle du convertisseur
12b. unité de contrôle de chauffe CC
12c. unité de contrôle de chauffe CA (optionnel)
12d. unité de contrôle d'un accessoire électrique secondaire
13. dispositif d'électronique de puissance
13a. convertisseur (de tension) (CC/CC)/hacheur (de type « buck »)
13b1. moyen de commutation (commutateur)(interrupteur) de courant pour le chauffe-eau
13b2. moyen de commutation (commutateur)(interrupteur) de courant pour la batterie
14. coupe-circuit batterie
15. fusible
16. raccord à la prise de terre
17. raccord au réseau électrique en courant alternatif (optionnel)
18. vanne 3 voies motorisée (optionnel)
19. câble bus
20. basculeur (optionnel - uniquement grand parc photovoltaïque)
21. accessoire électrique secondaire
22. moyen de commutation (commutateur)(interrupteur) pour le bouilleur
23. moyen de commutation (commutateur)(interrupteur) pour l'accessoire électrique secondaire

## Revendications

1. Système de gestion (5) de l'énergie produite par au moins une source à courant continu (1), dont la puissance est variable dans le temps, le dit système comprenant :
- au moins une source à courant continu (1), en particulier un ou plusieurs panneaux solaires (1);
- au moins un dispositif de stockage d'énergie (4, 6, 6') destiné à absorber la puissance variable produite par l'au moins une source à courant continu (1); comprenant :
- au moins un dispositif de stockage d'énergie de type thermique (6, 6'), en particulier un chauffe-eau, comportant au moins une cuve (6a, 6b, 6c) destinée à recevoir de l'eau en utilisation et au moins une source de chaleur (8) alimentée en courant continu pour chauffer l'eau; et
- au moins un dispositif de stockage d'énergie (4) de type chimique, en particulier une batterie (4) ;
- un convertisseur continu/continu (13a) comprenant une entrée et une sortie, la sortie dudit convertisseur (13a) étant connectée à l'au moins un dispositif de stockage d'énergie de type thermique (6, 6'), la sortie dudit convertisseur (13a) étant en outre connectée à l'au moins un dispositif de stockage d'énergie de type chimique (4); l'entrée dudit convertisseur (13a) étant connectée à l'au moins une source à courant continu ;
- des moyens de mesure ou d'estimation (3) permettant de déterminer la puissance produite par l'au moins une source à courant continu (1) ;
- au moins une unité de contrôle (12a, 12b, 12c) ;
le système de gestion (5) étant **caractérisé en ce que** l'au moins une unité de contrôle (12a, 12b, 12c) permet de piloter un rapport de transformation du convertisseur continu/continu (13a) en fonction de la puissance produite par l'au moins une source à courant continu (1), de préférence ladite unité étant configurée pour maximiser la puissance extraite de l'au moins une source à courant continu (1) en utilisation ;
et **en ce que** le système de gestion (5) comprend au moins un premier moyen de commutation (13b1, 22), en particulier un ou plusieurs interrupteurs, interposé entre la sortie du convertisseur continu/continu (13a) et l'au moins un dispositif de stockage d'énergie (6, 6') de type thermique et/ou au moins un deuxième moyen de commutation (14, 13b2), en particulier un ou plusieurs interrupteurs, interposé entre la sortie du convertisseur continu/continu (13a) et l'au moins un dispositif de stockage d'énergie (4) de type chimique, lesdits moyens de commutation (13b1, 13b2, 14, 22) étant configurés ou commandés de préférence par au moins une de l'au moins une unité de contrôle (12a, 12b, 12c) de sorte à autoriser ou bloquer le transfert de la puissance électrique entre l'au moins un dispositif de stockage d'énergie de type chimique (4) et l'au moins un dispositif de stockage de type thermique (6, 6'), en fonction d'au moins un paramètre, en particulier le niveau de stockage d'énergie de l'au moins un dispositif de stockage d'énergie de type chimique et/ou thermique.

2. Système de gestion (5) selon la revendication 1, **caractérisé en ce que** lesdits moyens de commutation (13b1, 13b2, 14, 22) sont configurés ou commandés de préférence par l'au moins une de l'au moins une unité de contrôle (12a, 12b, 12c) de sorte :
- à distribuer, en particulier aiguiller la puissance variable produite (Pv) par l'au moins une source à courant continu (1), vers l'au moins un dispositif de stockage d'énergie de type thermique (6, 6') et/ou l'au moins un dispositif de stockage d'énergie de type chimique (4) en fonction au moins de la puissance variable produite par l'au moins une source à courant continu (1).

3. Système (5) selon la revendication 1 ou 2, **caractérisé en ce que** l'au moins un dispositif de stockage d'énergie de type thermique (6, 6') comprend un premier dispositif de stockage d'énergie de type thermique (6, 6') et **en ce que** l'au moins une source de chaleur comprend au moins une résistance chauffante (8) et/ou un échangeur d'une pompe à chaleur.

4. Système (5) selon l'une des revendications précédentes, **caractérisé en ce que** l'au moins une cuve comprend une première (6b) et une deuxième (6a) cuve.

5. Système (5) selon la revendication 4 , **caractérisé en ce que** l'au moins un premier moyen de commutation (13b1, 22) comprend deux premiers moyens de commutation (13b1), en particulier deux ou plus de deux interrupteurs, et **en ce que** l'au moins une source de chaleur (8) comprend une première source de chaleur (8) et une deuxième source de chaleur (8) connectées respectivement aux deux premiers moyens de commutation (13b1), de préférence la première (8) et la deuxième (8) source de chaleur étant disposées respectivement dans la première (6b) et la deuxième cuve (6a).

6. Système (5) selon l'une des revendications 3 à 5, **caractérisé en ce que** l'au moins un dispositif de stockage d'énergie de type thermique (4, 6, 6') comprend un deuxième dispositif de stockage d'énergie de type thermique (6') et **en ce que** l'au moins un premier moyen de commutation (13b1, 22) comprend en outre un (22) ou deux moyens de commutation, en particulier au moins un et/ou deux interrupteurs, connectés à une ou deux sources de chaleur (8) disposées dans le deuxième dispositif de stockage d'énergie de type thermique (6').

7. Système (5) selon la revendication précédente, **caractérisé en ce que** le deuxième dispositif de stockage d'énergie de type thermique comprend une cuve (6c) présentant un volume de stockage inférieur à 40%, de préférence inférieur à 20% du volume de l'au moins une cuve (6a, 6b) du premier dispositif de stockage d'énergie de type thermique (6), de préférence inférieur au volume cumulé de la première (6b) et de la deuxième cuve (6a).

8. Système selon l'une des revendications précédentes étant non connecté à un réseau électrique.

9. Système (5) selon l'une des revendications précédentes, **caractérisé en ce que** le convertisseur continu/continu (13a) comprenant au moins un élément du groupe comportant :
- au moins un premier connecteur électrique relié à la sortie dudit convertisseur (13a) et destiné à connecter ladite sortie à l'au moins un dispositif de stockage d'énergie (6, 6') de type thermique,
- au moins un deuxième connecteur électrique relié à la sortie dudit convertisseur (13a) et destiné à connecter ladite sortie à l'au moins un dispositif de stockage d'énergie (4) de type chimique; et/ou
- au moins un troisième connecteur électrique relié à l'entrée dudit convertisseur (13a) et destiné à connecter ladite entrée à l'au moins une source à courant continu (1).

10. Méthode de contrôle d'un système gestion selon l'une des revendications 1 à 9, comprenant les étapes suivantes :
- acquisition :
- d'au moins une première valeur représentative de la tension de l'au moins une source à courant continu (1), et/ou
- d'au moins une deuxième valeur représentative du courant de l'au moins une source à courant continu (1) ;
- réguler le rapport de transformation du convertisseur continu/continu (13a) de façon à ce que au moins une puissance déterminée à partir de l'au moins une première valeur et/ou l'au moins une deuxième valeur, soit maximisée.

11. Méthode selon la revendication précédente comprenant les étapes suivantes :
- comparaison entre la puissance variable produite (Pv) par l'au moins une source à courant continu (1) et au moins un seuil de routage prédéterminé,
- distribution au moins en partie de la puissance variable produite (Pv) vers soit l'au moins un dispositif de stockage d'énergie de type chimique (4) soit vers l'au moins un dispositif de stockage d'énergie de type thermique (6, 6') en fonction du résultat de la comparaison effectuée à l'étape précédente.

12. Méthode selon la revendication précédente, comprenant une étape de définir l'au moins un seuil de routage prédéterminé, ledit seuil étant compris entre 5% et 100 %, de préférence entre 15% et 60% ou entre 90% et 100% de la puissance maximale d'absorption de l'au moins un dispositif de stockage d'énergie de type chimique (4).

13. Méthode selon l'une des revendications précédentes 11 à 12, comprenant une étape d'acquérir une valeur de l'au moins un seuil de routage prédéterminé, ladite valeur étant prédéfinie par défaut, déterminée selon des règles préprogrammées ou sélectionnée par un utilisateur.

14. Méthode selon l'une des revendications précédentes 11 à 13, comprenant une étape de transférer la puissance variable produite par l'au moins un dispositif de stockage d'énergie de type chimique (4) vers l'au moins un dispositif de stockage d'énergie de type thermique (6, 6') en fonction au moins d'un paramètre caractérisant l'énergie absorbée par l'au moins dispositif de stockage d'énergie de type chimique (4) et/ou thermique (6).

15. Programme d'ordinateur comprenant des instructions qui, lorsque le programme est exécuté par au moins une unité de contrôle (12a, 12b, 12c) du système gestion selon l'une des revendications 1 à 9, conduisent ladite unité à mettre en œuvre les étapes de la méthode selon l'une des revendications 10 à 14.

## Patentansprüche

1. Verwaltungssystem (5) der Energie, die von mindestens einer Gleichstromquelle (1) erzeugt wird, deren Leistung zeitlich variabel ist, das System umfassend:
- mindestens eine Gleichstromquelle (1), insbesondere ein oder mehrere Solarmodule (1);
- mindestens eine Energiespeichervorrichtung (4, 6, 6'), die dazu bestimmt ist, die variable Leistung zu absorbieren, die von der mindestens einen Gleichstromquelle (1) erzeugt wird; umfassend:
- mindestens eine thermische Energiespeichervorrichtung (6, 6'), insbesondere einen Wassererhitzer, umfassend mindestens einen Behälter (6a, 6b, 6c) zum Aufnehmen von Wasser im Gebrauch und mindestens eine Wärmequelle (8), die mit Gleichstrom versorgt wird, um das Wasser zu erhitzen; und
- mindestens eine Energiespeichervorrichtung (4) chemischen Typs, insbesondere eine Batterie (4);
- einen Gleichstrom/Gleichstrom-Wandler (13a), umfassend einen Eingang und einen Ausgang, wobei der Ausgang des besagten Wandlers (13a) mit der mindestens einen Energiespeichervorrichtung thermischen Typs (6, 6') verbunden ist, wobei der Ausgang des besagten Wandlers (13a) ferner mit der mindestens einen Energiespeichervorrichtung chemischen Typs (4) verbunden ist; wobei der Eingang des besagten Wandlers (13a) mit der mindestens einen Gleichstromquelle verbunden ist;
- Mess- oder Schätzeinrichtungen (3), die es ermöglichen, die von der mindestens einen Gleichstromquelle (1) erzeugte Leistung zu bestimmen;
- mindestens eine Steuereinheit (12a, 12b, 12c),
wobei das Verwaltungssystem (5) **dadurch gekennzeichnet ist, dass** die mindestens eine Steuereinheit (12a, 12b, 12c) es ermöglicht, ein Umwandlungsverhältnis des Gleichstrom/Gleichstrom-Wandlers (13a) abhängig von der von der mindestens einen Gleichstromquelle (1) erzeugten Leistung zu steuern, wobei die besagte Einheit vorzugsweise konfiguriert ist, um die von der mindestens einen Gleichstromquelle (1) im Gebrauch entnommene Leistung zu maximieren,
und dass das Verwaltungssystem (5) Folgendes umfasst
- mindestens eine erste Schalteinrichtung (13b1, 22), insbesondere einen oder mehrere Schalter, die zwischen den Ausgang des Gleichstrom/Gleichstrom-Wandlers (13a) und die mindestens eine Energiespeichervorrichtung (6, 6') thermischen Typs eingefügt sind, und/oder mindestens eine zweite Schalteinrichtung (14, 13b2), insbesondere einen oder mehrere Schalter, die zwischen den Ausgang des Gleichstrom/Gleichstrom-Wandlers (13a) und die mindestens eine Energiespeichervorrichtung (4) chemischen Typs eingefügt sind, wobei die besagte Schalteinrichtungen (13b1, 13b2, 14, 22) konfiguriert sind oder vorzugsweise von mindestens einer der mindestens einen Steuereinheit (12a, 12b, 12c) gesteuert werden, um die Übertragung der elektrischen Leistung zwischen der mindestens einen Energiespeichervorrichtung chemischen Typs (4) und der mindestens einen Speichervorrichtung thermischen Typs (6, 6') abhängig von mindestens einem Parameter, insbesondere dem Energiespeichergrad der mindestens einen Energiespeichervorrichtung chemischen und/oder thermischen Typs, freizugeben oder zu sperren.

2. Verwaltungssystem (5) nach Anspruch 1, **dadurch gekennzeichnet, dass** die besagte Schalteinrichtungen (13b1, 13b2, 14, 22) zu Folgendem konfiguriert sind oder vorzugsweise von mindestens einer der mindestens einen Steuereinheit (12a, 12b, 12c) gesteuert werden:
- Verteilen, insbesondere Lenken, der von der mindestens einen Gleichstromquelle (1) erzeugten variablen Leistung (Pv) zu der mindestens einen Energiespeichervorrichtung thermischen Typs (6, 6') und/oder der mindestens einen Energiespeichervorrichtung chemischen Typs (4) abhängig von mindestens der von der mindestens einen Gleichstromquelle (1) erzeugten variablen Leistung.

3. System (5) nach Anspruch 1 oder 2, **dadurch gekennzeichnet, dass** die mindestens eine Energiespeichervorrichtung thermischen Typs (6, 6') eine erste Energiespeichervorrichtung thermischen Typs (6, 6') umfasst und dass die mindestens eine Wärmequelle mindestens einen Heizwiderstand (8) und/oder einen Wärmetauscher einer Wärmepumpe umfasst.

4. System (5) nach einem der vorherigen Ansprüche, **dadurch gekennzeichnet, dass** der mindestens eine Behälter einen ersten (6b) und einen zweiten (6a) Behälter umfasst.

5. System (5) nach Anspruch 4, **dadurch gekennzeichnet, dass** die mindestens eine erste Schalteinrichtung (13b1, 22) zwei erste Schalteinrichtungen (13b1), insbesondere zwei oder mehrere Schalter, umfasst, und dass die mindestens eine Wärmequelle (8) eine erste Wärmequelle (8) und eine zweite Wärmequelle (8) umfasst, die jeweils mit den zwei ersten Schalteinrichtungen (13b1) verbunden sind, vorzugsweise wobei die erste (8) und die zweite (8) Wärmequelle jeweils in dem ersten (6b) und dem zweiten Behälter (6a) angeordnet sind.

6. System (5) nach einem der Ansprüche 3 bis 5, **dadurch gekennzeichnet, dass** die mindestens eine Energiespeichervorrichtung thermischen Typs (4, 6, 6') eine zweite Energiespeichervorrichtung thermischen Typs (6') umfasst und dass die mindestens eine erste Schalteinrichtung (13b1, 22) ferner ein (22) oder zwei Schalteinrichtungen, insbesondere mindestens einen und/oder zwei Schalter, die mit einer oder zwei Wärmequellen (8), die in der zweiten Energiespeichervorrichtung thermischen Typs (6') angeordnet sind verbunden sind, umfasst.

7. System (5) nach dem vorherigen Anspruch, **dadurch gekennzeichnet, dass** die zweite Energiespeichervorrichtung thermischen Typs einen Behälter (6c) umfasst, der ein Speichervolumen von weniger als 40 %, vorzugsweise weniger als 20 %, des Volumens des mindestens einen Behälters (6a, 6b) der ersten Energiespeichervorrichtung thermischen Typs (6), vorzugsweise weniger als das kumulierte Volumen des ersten (6b) und des zweiten Behälters (6a) aufweist.

8. System nach einem der vorherigen Ansprüche, das nicht mit einem Stromnetz verbunden ist.

9. System (5) nach einem der vorherigen Ansprüche, **dadurch gekennzeichnet, dass** der Gleichstrom/Gleichstrom-Wandler (13a) mindestens ein Element der Gruppe umfasst, die Folgendes umfasst:
- mindestens einen ersten elektrischen Verbinder, der mit dem Ausgang des besagten Wandlers (13a) verbunden ist und dazu bestimmt ist, den besagten Ausgang mit der mindestens einen Energiespeichervorrichtung (6, 6') thermischen Typs zu verbinden;
- mindestens einen zweiten elektrischen Verbinder, der mit dem Ausgang des besagten Wandlers (13a) verbunden ist und dazu bestimmt ist, den besagten Ausgang mit der mindestens einen Energiespeichervorrichtung (4) chemischen Typs zu verbinden; und/oder
- mindestens einen dritten elektrischen Verbinder, der mit dem Eingang des besagten Wandlers (13a) verbunden ist und dazu bestimmt ist, den besagten Eingang mit der mindestens einen Gleichstromquelle (1) zu verbinden.

10. Verfahren zum Steuern eines Verwaltungssystems nach einem der Ansprüche 1 bis 9, umfassend die folgenden Schritte:
- Erfassen:
- mindestens eines ersten Werts, der repräsentativ für die Spannung der mindestens einen Gleichstromquelle (1) ist, und/oder
- mindestens eines zweiten Werts, der repräsentativ für den Strom der mindestens einen Gleichstromquelle (1) ist;
- Regulieren des Umwandlungsverhältnisses des Gleichstrom/Gleichstrom-Wandlers (13a), sodass mindestens eine Leistung, die anhand des mindestens einen ersten Werts und/oder des mindestens einen zweiten Werts bestimmt wird, maximiert wird.

11. Verfahren nach dem vorherigen Anspruch, umfassend die folgenden Schritte:
- Vergleichen zwischen der variablen Leistung(Pv), die von der mindestens einen Gleichstromquelle (1) erzeugt wird, und mindestens einem vorbestimmten Weiterleitungsschwellenwert,
- Verteilen zumindest teilweise der erzeugten variablen Leistung (Pv) entweder an die mindestens eine Energiespeichervorrichtung chemischen Typs (4) oder an die mindestens eine Energiespeichervorrichtung thermischen Typs (6, 6') abhängig von dem Resultat des im vorherigen Schritt durchgeführten Vergleichs.

12. Verfahren nach dem vorherigen Anspruch, umfassend einen Schritt eines Definierens des mindestens einen vorbestimmten Weiterleitungsschwellenwerts, wobei der besagte Schwellenwert zwischen 5 % und 100 %, vorzugsweise zwischen 15 % und 60 % oder zwischen 90 % und 100 % der maximalen Absorptionsleistung des mindestens einen Energiespeichers chemischen Typs (4) liegt.

13. Verfahren nach einem der vorherigen Ansprüche 11 bis 12, umfassend einen Schritt eines Erfassens eines Werts des mindestens einen vorbestimmten Weiterleitungsschwellenwerts, wobei der besagte Wert standardmäßig voreingestellt ist, nach vorprogrammierten Regeln bestimmt oder von einem Benutzer ausgewählt wird.

14. Verfahren nach einem der vorherigen Ansprüche 11 bis 13, umfassend einen Schritt des Übertragens der variablen Leistung, die von der mindestens einen Energiespeichervorrichtung chemischen Typs (4) erzeugt wird, auf die mindestens eine Energiespeichervorrichtung thermischen Typs (6, 6') abhängig von mindestens einem Parameter, der die von der mindestens einen Energiespeichervorrichtung chemischen Typs (4) und/oder thermischen Typs (6) aufgenommene Energie charakterisiert.

15. Computerprogramm, umfassend Anweisungen, die, wenn das Programm von mindestens einer Steuereinheit (12a, 12b, 12c) des Verwaltungssystems nach einem der Ansprüche 1 bis 9 ausgeführt wird, die besagte Einheit veranlassen, die Schritte des Verfahrens nach einem der Ansprüche 10 bis 14 durchzuführen.

## Claims

1. Management system (5) for managing energy produced by at least one direct current source(1), the power of which is variable over time, said system comprising:
- at least one direct current source (1), more particularly one or a plurality of solar panels (1);
- at least one energy storage device (4, 6, 6') for absorbing the variable power produced by the at least one direct current source (1); comprising:
- at least one thermal type energy storage device (6, 6'), more particularly a water heater, including at least one vessel (6a, 6b, 6c) for receiving water when in use and at least one source of heat (8) supplied with direct current for heating the water; and
- at least one chemical type energy storage device (4), more particularly a battery (4);
- a DC/DC converter (13a) comprising an input and an output, the output of said converter (13a) being connected to the at least one thermal type energy storage device (6, 6'), the output of said converter (13a) being further connected to the at least one chemical type energy storage device (4); the input of said converter (13a) being connected to the at least one direct current source (DC);
- means of measuring or of estimating (3) for determining the power produced by the at least one direct current source (1);
- at least one control unit (12a, 12b, 12c),
the management system (5) being **characterized in that** the at least one control unit (12a, 12b, 12c) allows controlling a transformation ratio of the DC/DC converter (13a) depending on the power produced by the at least one direct current source (1), preferably said unit being configured to maximize the power extracted from the at least one direct current source (1) when in use
and that the management system (5) comprises
- at least one first means of switching (13b1, 22), more particularly one or a plurality of switches, interposed between the output of the DC/DC converter (13a) and the at least one thermal type energy storage device (6, 6') and/or at least one second means of switching (14, 13b2), more particularly one or a plurality of switches, interposed between the output of the DC/DC converter (13a) and the at least one chemical type energy storage device (4), said means of switching (13b1, 13b2, 14, 22) being configured or controlled preferably by at least one amongst the at least one control units (12a, 12b, 12c) so as to permit or block the transfer of electrical power between the at least one chemical type energy storage device (4) and at least one thermal type energy storage device (6, 6'), according to at least one parameter, more particularly the level of storage of energy of the at least one chemical type energy storage device and/or thermal type energy storage device.

2. Management system (5) according to claim 1, **characterized in that** said means of switching (13b1, 13b2, 14, 22) are preferably configured or controlled by the at least one of the at least one control unit (12a, 12b, 12c) so as
- to distribute, more particularly to direct the variable power (Pv) produced by the at least one direct current source (1) to the at least one thermal type energy storage device (6, 6') and/or the at least one chemical type energy storage device (4) according to at least the variable power produced by the at least one direct current source (1).

3. System (5) according to claim 1 or 2, **characterized in that** the at least one thermal type energy storage device (6, 6') comprises a first thermal type energy storage device (6, 6') and **in that** the at least one source of heat comprises at least one heating resistor (8) and/or a heat exchanger of a heat pump.

4. The system (5) according to one of the preceding claims, **characterized in that** the at least one tank comprises a first (6b) and a second (6a) tank.

5. System (5) according to claim 4, **characterized in that** the at least one first means of switching (13b1, 22) comprises two first means of switching (13b1), more particularly two or a plurality of switches, and **in that** the at least one source of heat (8) comprises a first source of heat (8) and a second source of heat (8) connected to the two first means of switching (13b1), respectively, preferably the first (8) and the second (8) sources of heat being arranged in the first (6b) and second tank (6a), respectively.

6. System (5) according to one of claims 3 to 5, **characterized in that** the at least one thermal type energy storage device (4, 6, 6') comprises a second thermal type energy storage device (6') and **in that** the at least one first means of switching (13b1, 22) further comprises one (22) or two means of switching, more particularly at least one and/or two switches, connected to one or two sources of heat (8) arranged in the second thermal type energy storage device (6').

7. System (5) according to the preceding claim, **characterized in that** the second thermal type energy storage device comprises a tank (6c) having a storage volume of less than 40%, preferably less than 20%, of the volume of the at least one tank (6a, 6b) of the first thermal type energy storage device (6), preferably less than the total volume of the first (6b) and of the second tank (6a).

8. System according to one of the preceding claims not being connected to an electrical grid.

9. System (5) according to one of the preceding claims, **characterized in that** the DC/DC converter (13a) comprises at least one element of the group comprising:
- at least one first electrical connector connected to the output of said converter (13a) and intended to connect said output to the at least one thermal type energy storage device (6, 6');
- at least one second electrical connector connected to the output of said converter (13a) and intended to connect said output to the at least one chemical type energy storage device (4); and/or
- at least one third electrical connector connected to the input of said converter (13a) and intended to connect said input to the at least one direct current source (1).

10. Control method for a management system according to one of claims 1 to 9, comprising the following steps:
- -acquisition:
- of at least one first value representative of the voltage of the at least one direct current source (1), and/or
- at least one second value representative of the current of the at least one direct current source (1)
- regulation of the transformation ratio of the DC/DC converter (13a) in such a way that at least one power determined from the at least one first value and/or the at least one second value is maximised.

11. Method according to the preceding claim comprising the following steps:
- comparison between the variable power (Pv) produced by the at least one direct current source (1) and at least one predetermined routing threshold,
- distribution, at least in part, of the variable power (Pv) produced, to either the at least one chemical type energy storage device (4) or to the at least one thermal type energy storage device (6, 6') depending on the result of the comparison carried out during the preceding step.

12. Method according to the preceding claim, comprising a step of defining the at least one predetermined routing threshold, said threshold being comprised between 5% and 100%, preferably between 15% and 60% or between 90% and 100% of the maximum absorption power of the at least one chemical type energy storage device (4).

13. Method according to one of the preceding claims 11 to 12, comprising a step of acquiring a value of the at least one predetermined routing threshold, said value being predefined by default, determined according to preprogrammed rules or selected by a user.

14. Method according to one of the preceding claims 11 to 13, comprising a step of transferring the variable power produced by the at least one chemical type energy storage device (4) to the at least one thermal type energy storage device (6, 6') according to at least one parameter characterising the energy absorbed by the at least one chemical type energy storage device (4) and/or thermal type energy storage device (6).

15. Computer programme comprising instructions that, when the program is executed by at least one control unit (12a, 12b, 12c) of the management system according to one of claims 1 to 9, lead said unit to implement the steps of the method according to one of claims 10 to 14.
